# EUROPEAN PATENT APPLICATION

(11) **EP 2 752 954 A1**
(43) Date of publication of application: **09.07.2014**
(21) Application number: 12827176.4
(22) Date of filing: 31.08.2012
(51) Int. Cl.: H02J 3/00, H02J 3/32, H02J 13/00

(54) **POWER DELIVERY/RECEPTION SYSTEM, POWER-STORAGE-INFORMATION MANAGEMENT DEVICE, CONTROL METHOD, AND PROGRAM**

(30) Priority: 01.09.2011 JP 2011190524
(71) Applicant: Mitsubishi Heavy Industries, Ltd., Tokyo 108-8215 (JP)
(72) Inventor: ONO Hidekazu, Tokyo 108-8215 (JP); ISHII Shinya, Tokyo 108-8215 (JP); OWARI Nobuyuki, Tokyo 108-8215 (JP); ADACHI Tetsuya, Tokyo 108-8215 (JP)
(74) Representative: Henkel, Breuer & Partner
(86) International application number: PCT/JP2012/072235
(87) International publication number: WO 2013/031979

(57) **Abstract**

This power delivery/reception system is provided with a power-storage-information management device that manages attribute information for power stored in a rechargeable battery. Said power-storage-information management device has an attribute evaluation unit and an attribute-information storage unit. Every time the rechargeable battery is charged and discharged, on the basis of attribute information for the power stored in the rechargeable battery, the attribute evaluation unit evaluates attributes of the power stored in the rechargeable battery. The power attribute information evaluated by the attribute evaluation unit is stored in the attribute-information storage unit.

## Description

### TECHNICAL FIELD

The present invention relates to a power delivery/reception system, a power storage information management device, a control method, and a program. In particular, the present invention relates to a power delivery/reception system which delivers/receives power using a storage battery, a power storage information management device which manages information about the power stored in the storage battery, a control method of controlling the power storage information management device, and a program for use in the power storage information management device.

Priority is claimed on Japanese Patent Application No. 2011-190524, filed September 1, 2011, the content of which is incorporated herein by reference.

### BACKGROUND ART

Recently, neologisms using the word "smart" are being frequently created, such as a "smart grid," "smart meter," and "smart community." Looking at the future of power networks using social-based systems in the real world, although "star" type structures providing power from a large-sized power plant to factories, offices, and homes are currently being used, distribution, two-way structures, and personalization are expected to advance rapidly according to progress and development of wind power generation, solar batteries, fuel batteries, and storage batteries, and policies for preventing global warming in order to support such efforts.

According to research and development disclosed in Non-Patent Literature 1, an energy information-oriented idea which is aimed at constructing a new super-distributed energy social infrastructure by integrating a power network and an information network has been proposed. More specifically, according to the research and development disclosed in Non-Patent Literature 1, a process of distinguishing power according to power sources when a plurality of power sources are installed at a home and performing energy management considering the reduction of an amount of carbon dioxide generated as well as quantitative energy saving has been proposed.

### CITATION LIST

### NON PATENT LITERATURE

### [Non Patent Literature 1]

Matsuyama Takashi, "<Research and Trends of University> Information of Energy: Integration of Power Network and Information Network," Cue: Information Technology Magazine of Department related to Electrical Engineering of Kyoto University, Alumni Association of Department related to Electrical Engineering of Kyoto University, March 2010, No. 23, pp. 3 to 8

### DISCLOSURE OF INVENTION

### PROBLEMS TO BE SOLVED BY THE INVENTION

According to the research and development disclosed in Non-Patent Literature 1, because power from each power source is supplied in association with information about the power source, it is possible to implement various types of energy management based on a difference in the power source by referring to the information.

However, even when power with which a storage battery has been charged is associated with information about a power source of the power, it is difficult to utilize the associated information because it is difficult to extract only the power from a specific power source upon charging when the charging has been performed with the power from a plurality of power sources.

### MEANS FOR SOLVING THE PROBLEMS

In order to solve the above-described problem, the present invention has the following aspects.
(1) There is provided a power delivery/reception system which delivers/receives power using a storage battery, the power delivery/reception system including: a power storage information management device configured to manage attribute information of power stored in the storage battery, wherein the power storage information management device includes: an attribute evaluation section configured to evaluate an attribute of the power stored in the storage battery based on the attribute information of the power stored in the storage battery every time the storage battery is charged and discharged; and an attribute information storage section in which the attribute information of the power evaluated by the attribute evaluation section is stored.
(2) There is provided the power delivery/reception system according to the above-described (1), wherein the power storage information management device further includes: an attribute data reception section configured to receive attribute data including the attribute information of the power supplied to the storage battery from a device which manages the attribute information of the power of a power supply source when the storage battery is charged with the power supplied from the power supply source, and wherein the attribute evaluation section evaluates the attribute of the power stored in the storage battery after charging based on the attribute information included in the attribute data received by the attribute data reception section and the attribute information stored in the attribute information storage section.
(3) There is provided the power delivery/reception system according to the above-described (1) or (2), wherein the power storage information management device further includes: an attribute data transmission section configured to transmit the attribute data including the attribute information of the power discharged from the storage battery to a device which manages the attribute information of the power of a power supply destination when the power discharged from the storage battery is supplied to the power supply destination, and wherein the attribute evaluation section evaluates the attribute of the power stored in the storage battery after discharging based on the attribute information included in the attribute data transmitted by the attribute data transmission section and the attribute information stored in the attribute information storage section.
(4) There is provided the power delivery/reception system according to any one of the above-described (1) to (3), wherein the power storage information management device manages information about a power generation scheme as the attribute information of the power.
(5) There is provided the power delivery/reception system according to any one of the above-described (1) to (4), wherein the power storage information management device manages information about a power company generating the power as the attribute information of the power.
(6) There is provided the power delivery/reception system according to any one of the above-described (1) to (5), wherein the power storage information management device manages information about a charging infrastructure selling the power as the attribute information of the power.
(7) There is provided a power storage information management device which manages attribute information of power stored in a storage battery, the power storage information management device including: an attribute evaluation section configured to evaluate an attribute of the power stored in the storage battery based on the attribute information of the power stored in the storage battery every time the storage battery is charged and discharged; and an attribute information storage section in which the attribute information of the power evaluated by the attribute evaluation section is stored.
(8) There is provided a control method of controlling a power storage information management device which manages attribute information of power stored in a storage battery, the control method including: an attribute evaluation step of evaluating an attribute of power stored in the storage battery based on the attribute information of the power stored in the storage battery every time the storage battery is charged and discharged.
(9) There is provided a program for use in a power storage information management device which manages attribute information of power stored in a storage battery, the program causing the power storage information management device to function as: an attribute evaluation section configured to evaluate an attribute of the power stored in the storage battery based on the attribute information of the power stored in the storage battery every time the storage battery is charged and discharged; and an attribute information storage section in which the attribute information of the power evaluated by the attribute evaluation section is stored.

In addition, the above outline of the present invention does not include all the necessary characteristics of the present invention, and sub-combinations of groups of the characteristics can also be the aspects of the invention.

### EFFECTS OF THE INVENTION

As apparent from the above description, according to the present invention, attribute information of power can be associated with the power of charging/discharging of a storage battery upon delivering/receiving the power via the storage battery.

### BRIEF DESCRIPTION OF THE DRAWINGS

Fig. 1 is a diagram illustrating an example of a usage environment of a power delivery/reception system 100 according to a first embodiment.
Fig. 2 is a diagram illustrating an example of a block configuration of a power storage information management device 110a.
Fig. 3 is a diagram illustrating an example of information stored in an attribute information storage section 117 in the form of a table.
Fig. 4 is a diagram illustrating an example of information stored in an attribute information storage section 117 in the form of a table.
Fig. 5 is a diagram illustrating an example of information stored in an attribute information storage section 117 in the form of a table.
Fig. 6 is a diagram illustrating an example of information stored in an attribute information storage section 117 in the form of a table.
Fig. 7 is a diagram illustrating an example of information stored in an attribute information storage section 117 in the form of a table.
Fig. 8 is a diagram illustrating an example of a block configuration of a power supply information management device 130a.
Fig. 9 is a diagram illustrating an example of information stored in an attribute information storage section 135 in the form of a table.
Fig. 10 is a diagram illustrating an example of a block configuration of a power reception information management device 150a.
Fig. 11 is a diagram illustrating an example of information stored in an attribute information storage section 156 in the form of a table.
Fig. 12 is a diagram illustrating an example of information stored in a condition information storage section 157 in the form of a table.
Fig. 13 is a diagram illustrating an example of information stored in the condition information storage section 157 in the form of a table.
Fig. 14 is a diagram illustrating an example of a block configuration of a power generation information management device 170.
Fig. 15 is a diagram illustrating an example of information stored in an attribute information storage section 173 in the form of a table.
Fig. 16 is a diagram illustrating an example of an operation flow of the power generation information management device 170.
Fig. 17 is a diagram illustrating an example of an operation sequence of a power supply information management device 130 and the power generation information management device 170.
Fig. 18 is a diagram illustrating an example of an operation flow of the power supply information management device 130.
Fig. 19 is a diagram illustrating an example of an operation sequence of a power storage information management device 110 and the power supply information management device 130.
Fig. 20 is a diagram illustrating an example of an operation flow of the power storage information management device 110.
Fig. 21 is a diagram illustrating an example of an operation sequence of the power storage information management device 110 and a power reception information management device 150.
Fig. 22 is a diagram illustrating an example of a usage environment of a power delivery/reception system 200 according to a second embodiment.
Fig. 23 is a diagram illustrating an example of a block configuration of a power storage information management device 210a.
Fig. 24 is a diagram illustrating an example of information stored in an attribute information storage section 217 in the form of a table.
Fig. 25 is a diagram illustrating an example of information stored in an attribute information storage section 217 in the form of a table.
Fig. 26 is a diagram illustrating an example of information stored in an attribute information storage section 217 in the form of a table.
Fig. 27 is a diagram illustrating an example of information stored in an attribute information storage section 217 in the form of a table.
Fig. 28 is a diagram illustrating an example of a block configuration of a power storage information management server 290.
Fig. 29 is a diagram illustrating an example of information stored in a payment information storage section 293 in the form of a table.
Fig. 30A is a diagram illustrating an example of information stored in an attribute information storage section 294 in the form of a table.
Fig. 30B is a diagram illustrating an example of information stored in the attribute information storage section 294 in the form of a table.
Fig. 31 is a diagram illustrating an example of an operation sequence of a power storage information management device 210a, a power storage information management device 210b, and the power storage information management server 290.

### PREFERRED EMBODIMENTS FOR CARRYING OUT THE INVENTION

Hereinafter, the present invention will be described through embodiments of the invention. However, the following embodiments are not intended to limit the present invention to the claims, and all the combinations of characteristics described in the embodiments are not necessarily required for a solution means of the invention.

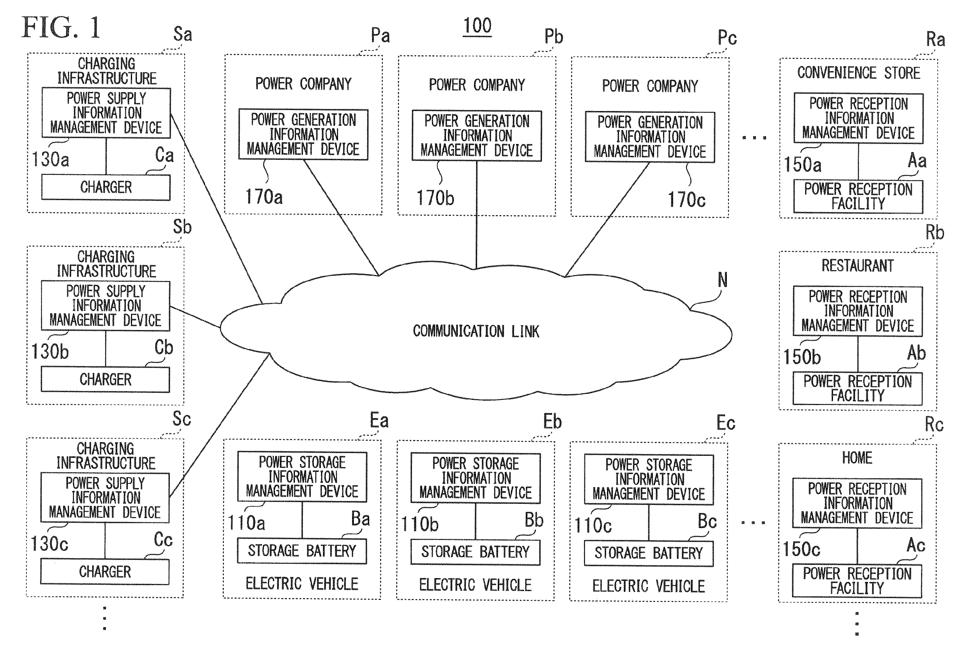

Fig. 1 is a diagram illustrating an example of a usage environment of a power delivery/reception system 100 according to a first embodiment. The power delivery/reception system 100 is a system in which power is sold/purchased using a storage battery. More specifically, the power delivery/reception system 100 is a system in which power is sold/purchased according to charging/discharging of storage batteries Ba, Bb, Bc, ... (hereinafter collectively referred to as a storage battery B) which are mounted on electric vehicles Ea, Eb, Ec, ... (hereinafter collectively referred to as an electric vehicle E), respectively. A user of the electric vehicle E purchases power by causing the storage battery B to be charged with the power supplied from the chargers Ca, Cb, Cc, ... (hereinafter collectively referred to as a charger C) which are provided in charging infrastructures Sa, Sb, Sc, ... (hereinafter collectively referred to as a charging infrastructure S). In addition, the user of the electric vehicle E sells power by discharging the power with which the storage battery B is charged and supplying the power to power reception facilities Aa, Ab, Ac, ... (hereinafter collectively referred to as a power reception facility A) provided under power customers Ra, Rb, Rc, ... (hereinafter collectively referred to as a customer R) such as a convenience store Ra, a restaurant Rb, and a home Rc. Here, in the power delivery/reception system 100, it is assumed that there are a plurality of power companies Pa, Pb, Pc, ... (hereinafter collectively referred to as a power company P). Each charging infrastructure S receives power supplied from a contracted power company P among a plurality of power companies P and supplies the power to the storage battery B of the electric vehicle E via the charger C. In addition, in the charging infrastructure S, a privately owned power generation facility such as a solar power generation system or the like is provided. In this case, power generated by the privately owned power generation facility is also supplied to the charger C of the charging infrastructure S. In addition, a power selling/purchasing process may be an example of "power delivery/reception" in the present invention. In addition, the charger C may be an example of a "power supply source" in the present invention. In addition, the power reception facility A may be an example of a "power supply destination" in the present invention.

The power delivery/reception system 100 includes a plurality of power storage information management devices 110a, 110b, 110c, ... (hereinafter collectively referred to as a power storage information management device 110), a plurality of power supply information management devices 130a, 130b, 130c, ... (hereinafter collectively referred to as a power supply information management device 130), a plurality of power reception information management devices 150a, 150b, 150c, ... (hereinafter collectively referred to as a power reception information management device 150), a plurality of power generation information management devices 170a, 170b, 170c, ... (hereinafter collectively referred to as a power generation information management device 170), and a communication link N. Here, the communication link N includes a computer network such as the Internet, a core network of a communication provider, and various local networks. In addition, the power supply information management device 130 may be an example of a "device which manages attribute information of power of a power supply source" in the invention. In addition, the power reception information management device 150 may be an example of a "device which manages attribute information of power of a power supply destination" in the invention.

The power storage information management device 110 is a device which manages attribute information of power stored in the storage battery B. For example, the power storage information management device 110 manages information about a power generation scheme, information about the power company P generating the power, and information about the charging infrastructure S selling the power as the attribute information of the power. More specifically, the power storage information management device 110 is mounted on the electric vehicle E. Then, the power storage information management device 110 is electrically connected to each of a power meter (not illustrated), a display, and a communication device. Here, the power meter is an instrument for measuring a charging/discharging amount of the storage battery B. In addition, the display is a device which displays information managed by the power storage information management device 110. In addition, the communication device includes a security module and is a device for enabling the power storage information management device 110 to securely perform near-field wireless communication with the power supply management device 130 or the power reception management device 150. The security module, for example, is a component for encrypting data or technically performing protection using defense software, an access restriction mechanism, or the like and eliminating risks such as leaking of secrets or an attack, intrusion, eavesdropping, or alteration from the outside.

The power supply information management device 130 is a device which manages attribute information of power supplied from the charger C. More specifically, the power supply information management device 130 is provided in the charging infrastructure S. Thus, the power supply information management device 130 establishes a communication connection to the communication link N. In addition, the power supply information management device 110 is electrically connected to each of the charger C and a power meter, an input device, and a communication device which are not illustrated. Here, the power meter is an instrument for measuring a power supply amount from the charger C. In addition, the input device is a device for providing data or information, an instruction, etc. to the power supply information management device 130. In addition, the communication device includes a security module, and is a device for enabling the power supply information management device 130 to securely perform near-field wireless communication with the power storage information management device 110.

The power reception information management device 150 is a device which manages attribute information of power received by the power reception facility A. More specifically, the power reception information management device 150 is owned by the customer R.

The power reception information management device 150 is electrically connected to an input device and a communication device which are not illustrated. Here, the input device is a device for providing data or information, an instruction, etc. to the power supply information management device 130. In addition, the communication device includes a security module, and is a device for enabling the power reception information management device 150 to securely perform near-field wireless communication with the power storage information management device 110.

The power generation information management device 170 is a device which manages attribute information of power generated by the power company. More specifically, the power generation information management device 170 is owned by the power company P. Thus, the power generation information management device 170 establishes a communication connection to the communication link N.

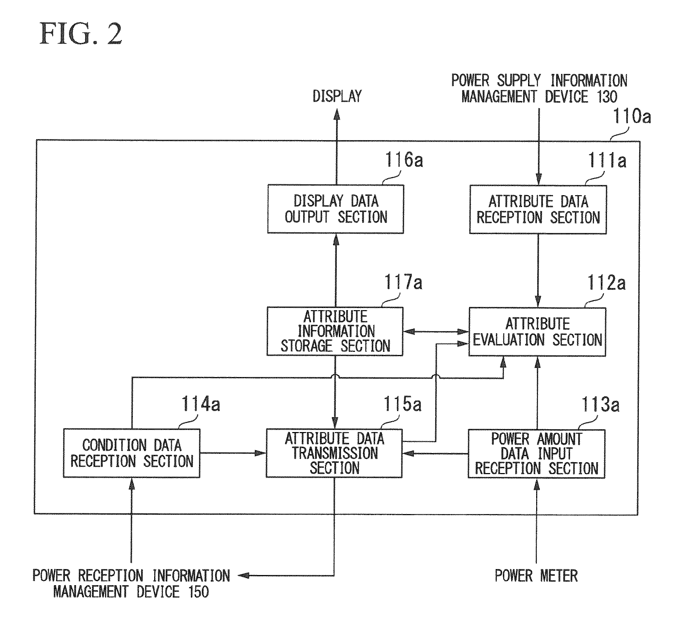

Fig. 2 illustrates an example of a block configuration of the power storage information management device 110a. The power storage information management device 110a has an attribute data reception section 111a, an attribute evaluation section 112a, a power amount data input reception section 113a, a condition data reception section 114a, an attribute data transmission section 115a, a display data output section 116a, and an attribute information storage section 117a. Hereinafter, a function and operation of each component will be described.

In addition to the power storage information management device 110a, the power storage information management devices 110b, 110c,... also have the same components as the power storage information management device 110a. When a component of the power storage information management device 110 is distinguished in the following description, the distinguishment is made by suffixing one of a, b, c... to the number of the component according to the power storage information management device 110 that includes the component. For example, the attribute data reception sections 111a, 111b, and 111c represent the components of the power storage information management devices 110a, 110b, and 110c, respectively.

In addition, in the following description, functions and operations of components to which no suffix is attached represent functions and operations of any component to which the same reference number is assigned. For example, the functions and operations described with regard to the attribute data reception section 111 represent the functions and operations of each of the attribute data reception sections 111a, 111b, 111c, ...

When the storage battery B is charged with the power supplied from the charger C, the attribute data reception section 111 receives attribute data including attribute information of power supplied to the storage battery B from the power supply information management device 130.

The attribute evaluation section 112 evaluates an attribute of the power stored in the storage battery B based on the attribute information of the power stored in the storage battery B every time the storage battery B is charged and discharged. More specifically, the attribute evaluation section 112 evaluates the attribute of the power stored in the storage battery B after the charging based on the information included in the attribute data received by the attribute data reception section 111 and the attribute information stored in the attribute information storage section 118. In addition, the attribute evaluation section 112 evaluates the attribute of the power stored in the storage battery B after the discharging based on the information included in the attribute data transmitted by the attribute data transmission section 111 and the attribute information stored in the attribute information storage section 118.

The power amount data input reception section 113 receives an input of data representing a charging/discharging amount of the storage battery B output from the power meter.

The condition data reception section 114 receives data representing a condition when the power is delivered/received from the power reception information management device 150.

When the power discharged from the storage battery B is supplied to the power reception facility A, the attribute data transmission section 115 transmits attribute data including the attribute information of the power discharged from the storage battery B to the power reception information management device 150.

The display data output section 116 outputs display data for causing the attribute information of the power stored in the storage battery B to be displayed on a display screen to the display.

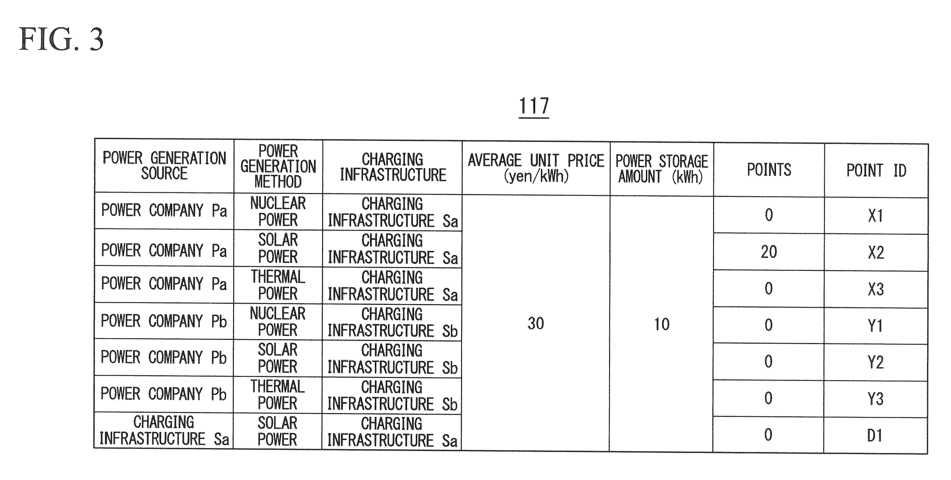

Each of Figs. 3 to 7 illustrates an example of information stored in the attribute information storage section 117 in the form of a table.

In the attribute information storage section 117, information about a power generation source, a power generation method, a charging infrastructure, an average unit price (yen/kWh), a power storage amount (kWh), points, and a point identifier (ID) is associated and stored.

The power generation source is information representing the power company P or the charging infrastructure S generating power with which the storage battery B is charged. The power generation method is information representing a power generation method by which the power with which the storage battery B is charged is generated. The charging infrastructure is information representing the charging infrastructure S from which the power with which the storage battery B is charged is supplied. The average unit price (yen/kWh) is information representing an average unit price of the power of each attribute stored in the storage battery B. The power storage amount (kWh) is information representing the power storage amount of the storage battery B. The points are issued from the power company P or a provider of a charging stand S and are information representing the number of points of a point service given according to the attribute and the charging amount of the power. The point ID is an identification code for identifying points issued on the basis of which power company P or which provider of the charging stand S has generated power according to which power generation method.

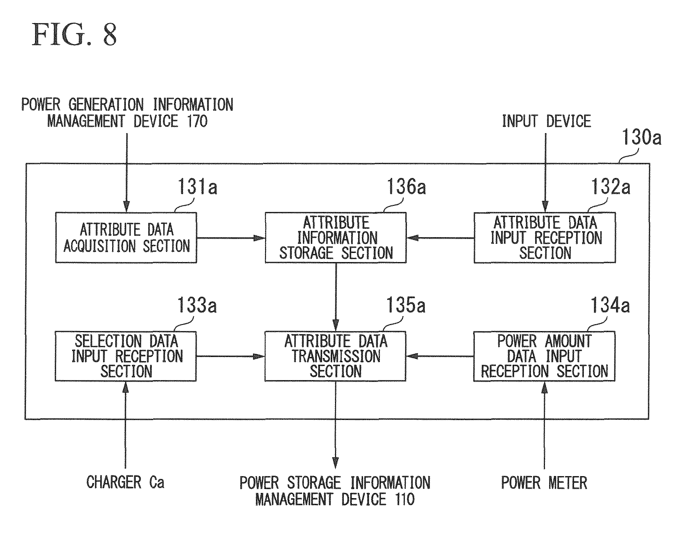

Fig. 8 illustrates an example of a block configuration of the power supply information management device 130a. The power supply information management device 130a includes an attribute data acquisition section 131a, an attribute data input reception section 132a, a selection data input reception section 133a, a power amount data input reception section 134a, an attribute data transmission section 135a, and an attribute information storage section 136a. Hereinafter, a function and operation of each component will be described.

In addition to the power supply information management device 130a, the power supply information management devices 130b, 130c, ... also have the same components as the power supply information management device 130a. When a component of the power supply information management device 130 is distinguished in the following description, the distinguishment is made by suffixing one of a, b, c... to the number of the component according to the power supply information management device 130 that includes the component. For example, the attribute data acquisition sections 131a, 131b, and 131c represent the components of the power supply information management devices 130a, 130b, and 130c, respectively.

In addition, in the following description, functions and operations of components to which no suffix is attached represent functions and operations of any component to which the same reference number is assigned. For example, the functions and operations described with regard to the attribute data acquisition section 131 represent the functions and operations of each of the attribute data acquisition sections 131a, 131b, 131c, ...

The attribute data acquisition section 131 acquires attribute data including attribute information of power supplied from the power company P from the power generation information management device 170.

The attribute data input reception section 132 receives an input of the attribute data including the attribute information of the power supplied from the privately owned power generation facility via the input device.

The selection data input reception section 133 receives an input of data representing power selected by a user of the electric vehicle E as power with which the storage battery B of the electric vehicle E is charged output from the charger C.

The power amount data input reception section 134 receives an input of data representing a supply amount of power from the charger C to the storage battery B output from the power meter.

When the storage battery B is charged with the power supplied from the charger C, the attribute data transmission section 135 transmits attribute data including an attribute of the power with which the storage battery B is charged and information about a transaction value of power corresponding to a charging amount to the power storage information management device 110.

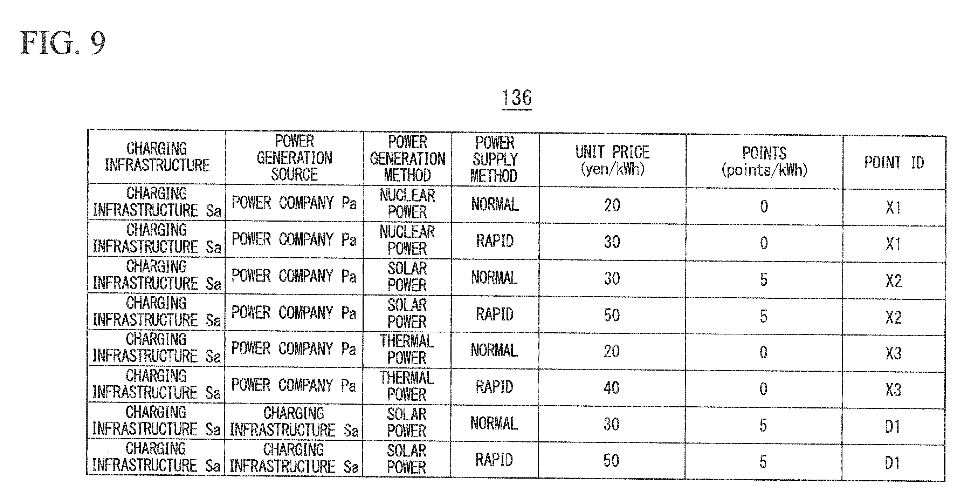

Fig. 9 illustrates an example of information stored in an attribute information storage section 136 in the form of a table. In the attribute information 135, information about a power generation source, a power generation method, a power supply method, a unit price (yen/kWh), points (points/kWh), and a point ID is associated and stored.

The power generation source is information representing the power company P or the charging infrastructure S generating power supplied by the charger C. The power generation method is information representing a power generation method by which the power supplied by the charger C is generated. The power supply method is information representing whether the power supply method for the power supplied by the charger C is normal power supply or rapid power supply. The unit price (yen/kWh) is information representing the unit price of the power supplied by the charger C. The points (points/kWh) are information representing the number of points of a point service delivered/received when the power is supplied from the charger C to the storage battery B. The point ID is an identification code for identifying points issued on the basis of which power company P or which charging stand S has generated power according to which power generation method.

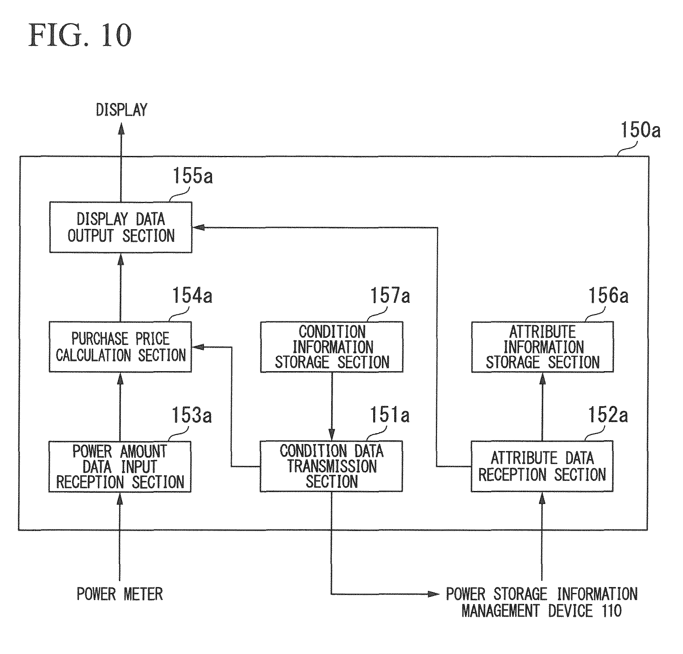

Fig. 10 illustrates an example of a block configuration of the power reception information management device 150a. The power reception information management device 150a includes a condition data transmission section 151a, an attribute data input reception section 152a, a power amount data input reception section 153a, a purchase price calculation section 154a, a display data output section 155a, an attribute information storage section 156a, and a condition information storage section 157a. Hereinafter, a function and operation of each component will be described.

In addition to the power reception information management device 150a, the power reception information management devices 150b, 150c, ... also have the same components as the power reception information management device 150a. When a component of the power reception information management device 150 is distinguished in the following description, the distinguishment is made by suffixing one of a, b, c... to the number of the component according to the power reception information management device 150 that includes the component. For example, the condition data transmission sections 151 a, 151 b, and 151c represent the components of the power reception information management devices 150a, 150b, and 150c, respectively.

In addition, in the following description, functions and operations of components to which no suffix is attached represent functions and operations of any component to which the same reference number is assigned. For example, the functions and operations described with regard to the condition data transmission section 151 represent the functions and operations of each of the condition data transmission sections 151a, 151b, 151c, ...

The condition data transmission section 151 transmits data representing a condition when the power is purchased to the power storage information management device 110.

When the power reception facility A has received power discharged from the storage battery B, the attribute data reception section 152 receives data including attribute information of the power discharged from the storage battery B and information about a transaction value of power corresponding to a discharging amount from the power storage information management device 110.

The power amount data input reception section 153 receives an input of data representing the power reception amount of the power reception facility A output from the power meter.

The purchase price calculation section 154 calculates a purchase value of power received by the power reception facility A.

The display data output section 155 outputs display data for causing the attribute information of the power received by the power reception facility A to be displayed on the display to the display.

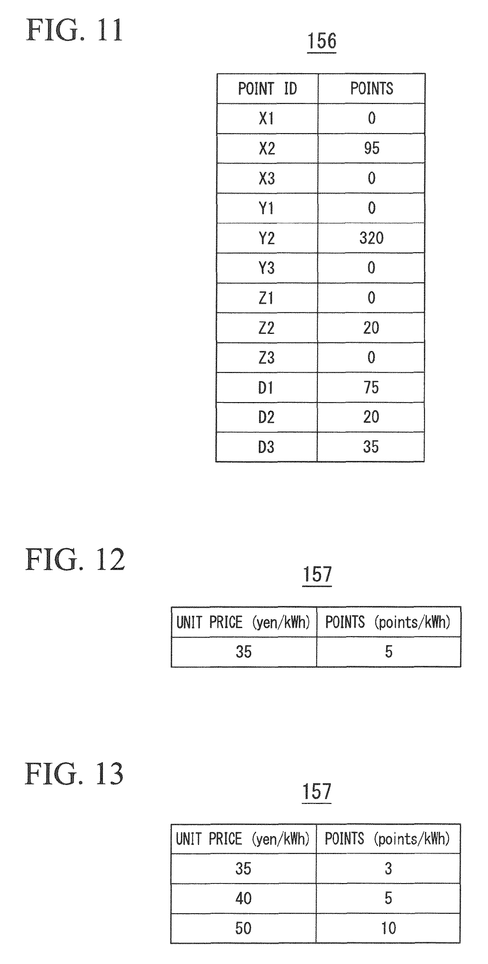

Fig. 11 illustrates an example of information stored in the attribute information storage section 156 in the form of a table. In the attribute information storage section 156, information about a point ID and points is associated and stored.

The point ID is an identification code for identifying points issued on the basis of which power company P or which charging stand S has generated power according to which power generation method.

The points are information representing the number of owned points of the point service in terms of points identified by the point ID.

Each of Figs. 12 and 13 illustrates an example of information stored in the condition information storage section 157 in the form of a table. In the condition information storage section 157, information about a purchase unit price (yen/kWh) and points (points/kWh) is stored.

The purchase unit price (yen/kWh) is information representing a purchase price per unit power amount to be paid from the customer R to the user of the electric vehicle E when the customer R purchases power from the user of the electric vehicle E. The points (points/kWh) are information representing the number of points of the point service assigned from the user of the electric vehicle E to the customer R when the customer R purchases power from the user of the electric vehicle E.

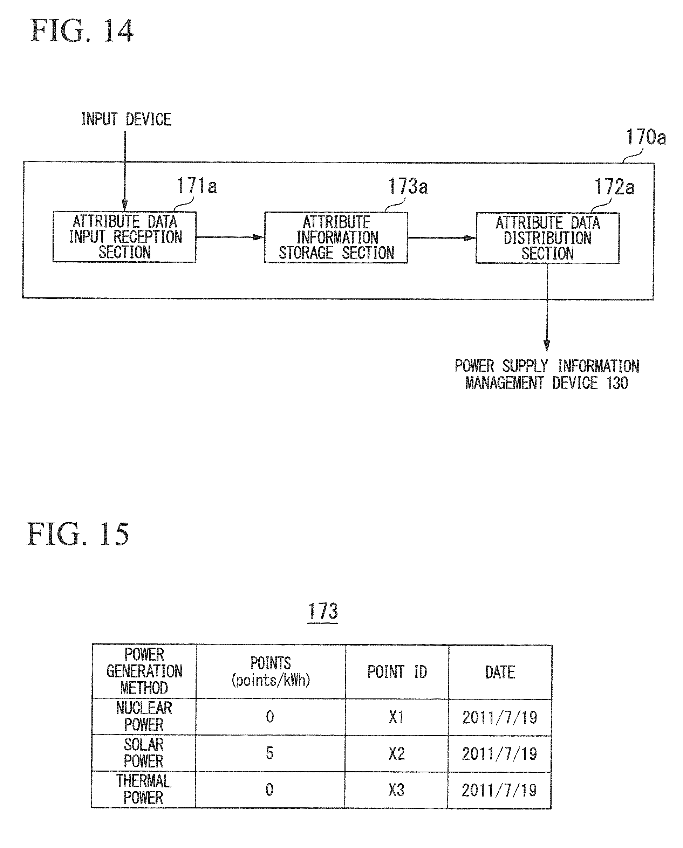

Fig. 14 illustrates an example of a block configuration of the power generation information management device 170a. The power generation information management device 170a has an attribute data input reception section 171a, an attribute data distribution section 172a, and an attribute information storage section 173a. Hereinafter, a function and operation of each component will be described.

In addition to the power generation information management device 170a, the power generation information management devices 170b, 170c, ... also have the same components as the power generation information management device 170a. When a component of the power generation information management device 170 is distinguished in the following description, the distinguishment is made by suffixing one of a, b, c... to the number of the component according to the power generation information management device 170 that includes the component. For example, the attribute data input reception sections 171a, 171b, and 171c represent the components of the power generation information management devices 170a, 170b, and 170c, respectively.

In addition, in the following description, functions and operations of components to which no suffix is attached represent functions and operations of any component to which the same reference number is assigned. For example, the functions and operations described with regard the attribute data input reception section 171 represent the functions and operations of each of the attribute data input reception sections 171 a, 171 b, 171c, ...

The attribute data input reception section 171 receives an input of attribute data including attribute information of power generated by the power company P via the input device.

The attribute data distribution section 172 distributes attribute data including the attribute information of power supplied from the power company P.

Fig. 15 illustrates an example of information stored in the attribute information storage section 173 in the form of a table. In the attribute information storage section 173, information about a power generation method, points (points/kWh), and a point ID is associated and stored.

The power generation method is information representing a power generation method by which the power supplied from the power company P is generated. The points (points/kWh) are information representing the number of points of the point service to be delivered/received when power generated by each power generation method is supplied. The point ID is an identification code for identifying points issued on the basis of which power company P or which charging stand S has generated power according to which power generation method.

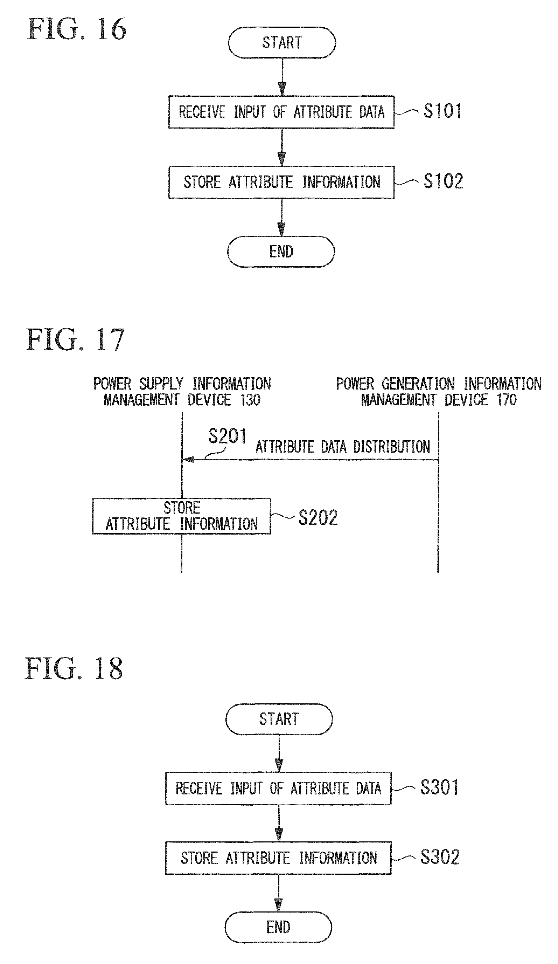

Fig. 16 illustrates an example of an operation flow of the power generation information management device 170. The operation flow indicates an operation when the attribute information of the power generated by the power company P has been input.

In addition, the operation flow will be described with reference to Figs. 1 to 15 together.

A manager of the power delivery/reception system 100 in the power company P inputs the attribute information of the power generated by the power company P to the power generation information management device 170 using the input device. For example, the manager of the power delivery/reception system 100 in the power company P associates and inputs information about the power generation method of power, information about the number of points of the point service to be delivered/received when the power generated by the power generation method is supplied, and a point ID for identifying the points as attribute information of the power generated by the power company P.

Upon receiving an input of the attribute information of the power via the input device (S 101), the attribute data input reception section 171 of the power generation information management device 170 stores data representing the attribute information of the power in the attribute information storage section 173 (S102). Thereby, for example, the attribute information of the power as illustrated in Fig. 15 is stored in the attribute information storage section 173 of the power generation information management device 170.

Fig. 17 illustrates an example of an operation sequence of a power supply information management device 130 and the power generation information management device 170. The operation sequence represents an operation when the attribute data including the attribute information of the power is distributed from the power generation information management device 170 of the power company P to the power supply information management device 130 of a charging station S of a contract destination of the power company P. In addition, the operation sequence will be described with reference to Figs. 1 to 16 together.

Here, it is assumed that the attribute information of power as illustrated in Fig. 15 is stored in the attribute information storage section 173 of the power generation information management device 170. Upon reading the attribute information of the power stored in the attribute information storage section 173, the attribute data distribution section 172 of the power generation information management device 170 distributes the attribute data including the attribute information of the power (S201). For example, the attribute data distribution section 172 distributes the attribute data including the attribute information of the power by publishing the attribute information of the power to the World Wide Web (WWW).

The attribute data acquisition section 131 of the power supply information management device 130 acquires the attribute data distributed from the power generation information management device 170. For example, the attribute data acquisition section 131 acquires the attribute data published to the WWW. Then, the attribute data acquisition section 131 stores the attribute information of the power included in the acquired attribute data in the attribute information storage section 136 (S202). Thereby, the attribute information of the power as illustrated in Fig. 9 is stored in the attribute information storage section 136 of the power supply information management device 130. In this step, information about the power supply method, information about a unit price (yen/kWh), and attribute information of the power generated in the charging infrastructure S are not stored.

Fig. 18 illustrates an example of an operation flow of the power supply information management device 130. This operation flow represents an operation when the attribute information of power supplied in the charging infrastructure S has been input. This operation sequence will be described with reference to Figs. 1 to 17 together.

The manager of the power delivery/reception system 100 in the charging infrastructure S inputs the attribute information of the power supplied in the charging infrastructure S to the power supply information management device 130 using the input device.

For example, the manager of the power delivery/reception system 100 in the charging infrastructure S inputs information about the power supply method, information about the unit price (yen/kWh), and the attribute information of the power generated in the charging infrastructure as the attribute information of the power supplied in the charging infrastructure S.

Upon receiving the input of the attribute information of the power via the input device (S301), the attribute data input reception section 132 of the power supply information management device 130 stores data representing the attribute information of the power in the attribute information storage section 136 (S302). Thereby, for example, the attribute information of the power as illustrated in Fig. 9 is stored in the attribute information storage section 136 of the power supply information management device 130.

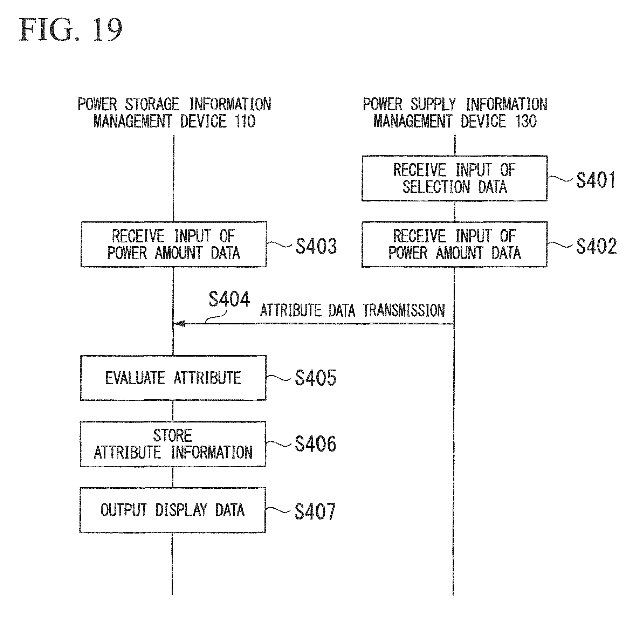

Fig. 19 illustrates an example of an operation sequence of the power storage information management device 110 and the power supply information management device 130. This operation sequence represents an operation when the storage battery B of the electric vehicle E is charged with power supplied from the charger C of the charging station S. In addition, the operation sequence will be described with reference to Figs. 1 to 18 together.

In the charging infrastructure S of the power delivery/reception system 100, it is assumed that it is possible to receive the supply of power in which a combination of the power generation method, the power supply method, the unit price (yen/kWh), and the points (points/kWh) of the point service is different. For example, when the information as illustrated in Fig. 9 is stored in the attribute information storage section 136 of the power supply information management device 130, it is possible to receive the supply of desired power among power of a power generation method "nuclear power," a power supply method "normal," a unit price "20 (yen/kWh)," and points "0 (points/kWh)," power of a power generation method "nuclear power," a power supply method "rapid," a unit price "30 (yen/kWh)," and points "0 (points/kWh)," power of a power generation method "solar power," a power supply method "normal," a unit price "30 (yen/kWh)," and points "5 (points/kWh)," power of a power generation method "solar power," a power supply method "rapid," a unit price "50 (yen/kWh)," and points "5 (points/kWh)," power of a power generation method "thermal power," a power supply method "normal," a unit price "20 (yen/kWh)," and points "0 (points/kWh)," and power of a power generation method "thermal power," a power supply method "rapid," a unit price "40 (yen/kWh)," and points "0 (points/kWh)" in the charging infrastructure S. Then, in the charger C of the charging infrastructure S, it is assumed that a selection button or the like for selecting power to be received is provided. The user of the electric vehicle E operates the selection button provided in the charger C, thereby selecting desired power and starting charging for the storage battery B of the electric vehicle E. On the other hand, the charger C outputs selection data representing power of a combination of the power generation method, the power supply method, the unit price (yen/kWh), and the points (points/kWh) of the point service selected by the selection button operated by the user of the electric vehicle E to the power supply information management device 130.

Upon receiving the input of the selection data output from the charger C (S401), the selection data input reception section 133 of the power supply information management device 130 transmits the selection data to the attribute data transmission section 135.

On the other hand, when the supply of power from the charger C to the storage battery B starts, the power meter of the charging infrastructure S starts to measure the power supply amount from the charger C to the storage battery B. Then, when the power supply from the charger C to the storage battery B ends, the power meter of the charging infrastructure S outputs the power amount data representing the measured power supply amount to the power supply information management device 130.

Upon receiving the input of the power amount data output from the power meter (S402), the power amount data input reception section 134 of the power supply information management device 130 transmits the power amount data to the attribute data transmission section 135.

Likewise, when the storage battery B starts to be charged, the power meter of the electric vehicle E starts to measure the charging amount for the storage battery B. Then, when the charging for the storage battery B ends, the power meter of the electric vehicle E outputs the power amount data representing the measured charging amount to the power storage information management device 110.

Upon receiving the input of the power amount data output from the power meter (S403), the power amount data input reception section 113 of the power storage information management device 110 transmits the power amount data to the attribute evaluation section 112.

On the other hand, upon receiving the selection data transmitted from the selection data input reception section 133 and receiving the power amount data transmitted from the power amount data input reception section 134, the attribute data transmission section 135 of the power supply information management device 130 reads attribute information stored in the attribute information storage section 136. More specifically, the attribute data transmission section 135 reads attribute information with which a combination of the power generation method, the power supply method, the unit price (yen/kWh), and the points (points/kWh) of the point service represented by the selection data received from the selection data input reception section 133 is associated among the attribute information stored in the attribute information storage section 136. Then, the attribute data transmission section 135 calculates a value obtained by multiplying a value of the points (points/kWh) read from the attribute information storage section 136 by a value of the power supply amount represented by the power amount data received from the power amount data input reception section 134 as the number of points of the point service to be assigned to the user performing the charging of the storage battery B of the electric vehicle E. Then, the attribute data transmission section 135 transmits attribute data including information about the calculated number of points of the point service and information about a charging infrastructure, a power generation source, a power generation method, a unit price (yen/kWh), and a point ID read from the attribute information storage section 136 to the power storage information management device 110 of the electric vehicle E performing the charging according to near-field wireless communication (S404).

In addition, a charging fee related to the charging of the storage battery B becomes a fee obtained by multiplying a value of the unit price (yen/kWh) read by the attribute data transmission section 135 from the attribute information storage section 136 by a value of a power supply amount represented by the power amount data.

Upon receiving the attribute data transmitted from the power supply information management device 130, the attribute data reception section 111 of the power storage information management device 110 transmits the attribute data to the attribute evaluation section 112.

Upon receiving the power amount data transmitted from the power amount data input reception section 113 and receiving the attribute data transmitted from the attribute data reception section 111, the attribute evaluation section 112 of the power storage information management device 110 evaluates an attribute of power stored in the storage battery B after the charging (S405). More specifically, the attribute evaluation section 112 evaluates an average unit price (yen/kWh), a power storage amount (kWh), and the number of points of the point service for power stored in the storage battery B after the charging as the attribute of the power stored in the storage battery B after the charging.

Here, it is assumed that the attribute information as illustrated in Fig. 3 is stored in the attribute information storage section 117 before the charging. In this case, the storage amount of power stored in the storage battery B before the charging is 10 (kWh). Then, assuming that the charging amount represented by the power amount data is 10 (kWh), the attribute evaluation section 112 evaluates the storage amount of power stored in the storage battery B after the charging as 10 (kWh)+10 (kWh) = 20 (kWh).

In addition, referring to Fig. 3, the number of points of the point service before the charging is 20 in a point ID "X2." Then, when information about the point ID "X2" and 50 points is included in the attribute data, the attribute evaluation section 112 evaluates the number of points of the point service after the charging as 70 points in the point ID "X2."

In addition, referring to Fig. 3, the storage amount of power stored in the storage battery B before the charging is 10 (kWh). In addition, referring to Fig. 3, an average unit price of power stored in the storage battery B before the charging is 30 (yen/kWh). Then, assuming that the charging amount represented by the power amount data is 10 (kWh) and information about a unit price "50 (yen/kWh)" is included in the attribute data, the attribute evaluation section 112 evaluates an average unit price of power stored in the storage battery B after the charging as (10 (kWh)x30 (yen/kWh)+10 (kWh)×50 (yen/kWh))/(10 (kWh)+10 (kWh)) = 40 (yen/kWh).

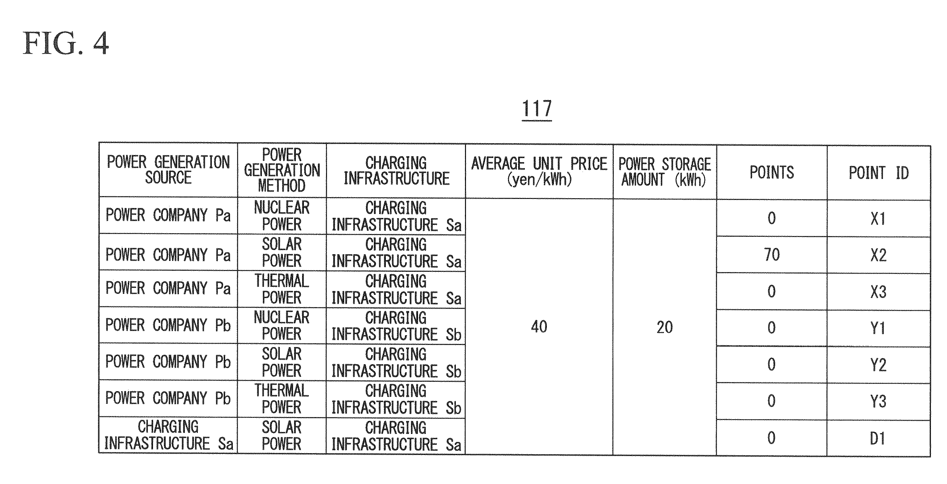

Then, the attribute evaluation section 112 stores the attribute information of the power evaluated as described above in the attribute information storage section 117 (S406). Thereby, the information as illustrated in Fig. 4 is stored in the attribute information storage section 117.

Thereby, when the attribute information stored in the attribute information storage section 117 is updated, the display data output section 116 of the power storage information management device 110 reads the attribute information stored in the attribute information storage section 117 and outputs display data for displaying current attribute information of power stored in the storage battery B on the display to the display (S407). Then, on the display, updated information about the average unit price (yen/kWh), the power storage amount (kWh), and the number of points of the point service is displayed as the current attribute information of the power stored in the storage battery B. Thereby, the user of the electric vehicle E can understand the attribute information of the power stored in the storage battery B after the charging.

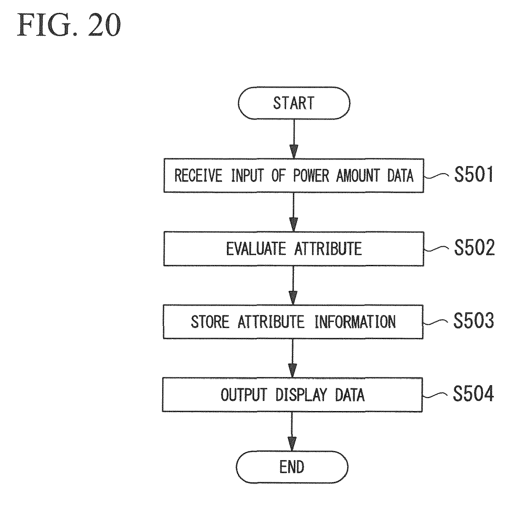

Fig. 20 is a diagram illustrating an example of an operation flow of the power storage information management device 110. This operation flow represents an operation when the electric vehicle E runs. In addition, the operation flow will be described with reference to Figs. 1 to 19 together.

The electric vehicle E runs by driving a motor according to power discharged from the storage battery B. In this manner, when the storage battery B is discharged according to the running of the electric vehicle E, the power meter of the electric vehicle E measures a discharging amount of the storage battery B. Then, the power meter outputs power amount data representing the discharging amount to the power storage information management device 110.

Upon receiving the input of the power amount data output from the power meter (S501), the power amount data input reception section 113 of the power storage information management device 110 transmits the power amount data to the attribute evaluation section 112.

Upon receiving the power amount data transmitted from the power amount data input reception section 113, the attribute evaluation section 112 of the power storage information management device 110 evaluates the attribute of the power stored in the storage battery B after the discharging (S502). More specifically, the attribute evaluation section 112 evaluates the storage amount (kWh) of the power stored in the storage battery B after the discharging as the attribute of power stored in the storage battery B after the discharging.

Here, it is assumed that the attribute information as illustrated in Fig. 4 is stored in the attribute information storage section 117 before the discharging. In this case, the storage amount of the power stored in the storage battery B before the discharging is 20 (kWh). Then, assuming that the discharging amount represented by the power amount data is 5 (kWh), the attribute evaluation section 112 evaluates the storage amount of the power stored in the storage battery B after the charging as 20 (kWh)-5 (kWh) = 15 (kWh).

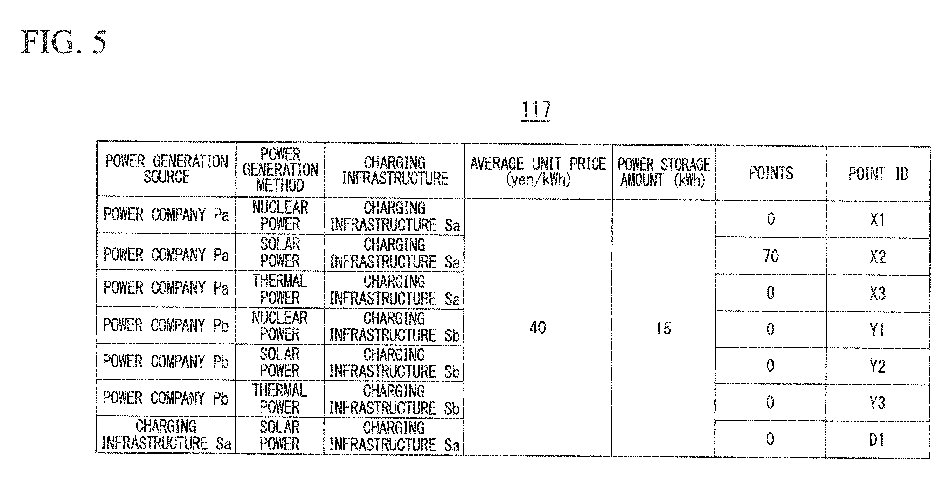

Then, the attribute evaluation section 112 stores the attribute information of the power evaluated as described above in the attribute information storage section 117 (S503). Thereby, the information as illustrated in Fig. 5 is stored in the attribute information storage section 117.

Thereby, when the attribute information stored in the attribute information storage section 117 is updated, the display data output section 116 of the power storage information management device 110 reads the attribute information stored in the attribute information storage section 117 and outputs display data for displaying current attribute information of power stored in the storage battery B on the display to the display (S504). Then, on the display, updated information about the power storage amount (kWh) is displayed as the current attribute information of the power stored in the storage battery B. Thereby, the user of the electric vehicle E can understand the power storage amount after the running.

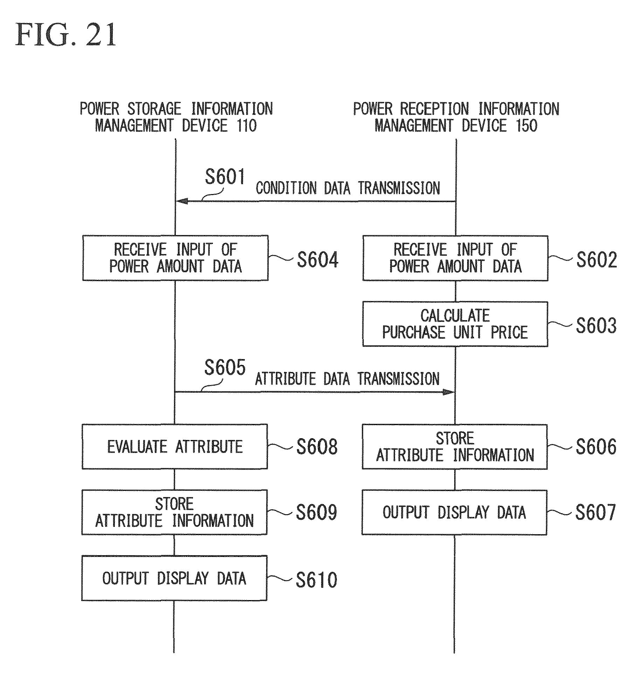

Fig. 21 illustrates an example of an operation sequence of the power storage information management device 110 and the power reception information management device 150. This operation sequence represents an operation when power discharged from the storage battery B of the electric vehicle E is supplied to the power reception facility A of the customer R. In addition, this operation sequence will be described with reference to Figs. 1 to 20 together.

In the power delivery/reception system 100, it is assumed that the user of the electric vehicle E can obtain the compensation by selling power stored in the storage battery B to the customer R.

Then, it is assumed that the power stored in the storage battery B is supplied to the power reception facility A of the customer R according to discharging and sold to the customer R.

In addition, in the power delivery/reception system 100, it is assumed that the customer R can set a desired condition when purchasing power. Then, it is assumed that the condition is stored in the condition information storage section 157 of the power reception information management device 150. For example, when a purchase unit price "35 (yen/kWh)" and points "5 points" of the point service to be delivered/received along with the power are set as the condition when the power is purchased, information as illustrated in Fig. 12 is stored in the condition information storage section 157. In this case, the user of the electric vehicle E performs a transaction according to the condition set by the customer R when selling the power stored in the storage battery B of the electric vehicle E.

In addition, when settings are made so that the user of the electric vehicle E selects the purchase unit price "35 (yen/kWh)," "40 (yen/kWh)," or "50 (yen/kWh)" and the user of the electric vehicle E selects "3 points," "5 points," or "10 points" of the point service to be delivered/received along with the power as the condition when the power is purchased, the information as illustrated in Fig. 13 is stored in the condition information storage section 157. Then, when the user of the electric vehicle E sells the power of the storage battery B of the electric vehicle E, the transaction is performed after a desired condition has been selected from among options of the condition defined by the customer R.

When an agreement on a condition for selling/purchasing power between the customer R and the user of the electric vehicle E is concluded, for example, the customer R inputs the agreed condition by operating the input device connected to the power reception information management device 150.

The condition data transmission section 151 of the power reception information management device 150 reads information corresponding to the input condition from the condition information storage section 157 to transmit condition data representing the condition to the purchase price calculation section 154 and transmits the condition data to the power storage information management device 110 according to near-field wireless communication (S601). Upon receiving the condition data transmitted from the power reception information management device 150, the condition data reception section 114 of the power storage information management device 110 transmits the condition data to the attribute evaluation section 112 and the attribute data transmission section 115.

Then, when the supply of power from the storage battery B to the power reception facility A starts, the power meter provided along with the power reception facility A starts to measure a power reception amount of the power reception facility A. Then, when the supply of power from the storage battery B to the power reception facility A ends, the power meter outputs power amount data representing the measured power reception amount to the power reception information management device 150.

Upon receiving the input of the power amount data output from the power meter (S602), the power amount data input reception section 153 of the power reception information management device 150 transmits the power amount data to the purchase price calculation section 154.

Upon receiving the condition data transmitted from the condition data transmission section 151 and receiving the power amount data transmitted from the power amount data input reception section 153, the purchase price calculation section 154 of the power storage information management device 150 calculates a purchase price of the power received by the power reception facility A (S603). More specifically, the purchase price calculation section 154 calculates a purchase price by multiplying a value of the purchase unit price (yen/kWh) represented by the condition data by a value of the power reception amount represented by the power amount data. Then, the purchase price calculation section 154 transmits purchase price data representing the calculated purchase price to the display data output section 155.

Likewise, when the supply of power from the storage battery B to the power reception facility A is started, the power meter of the storage battery B starts to measure a discharging amount of the storage battery B. Then, when the supply of power from the storage battery B to the power reception facility A ends, the power meter outputs power amount data representing the measured discharging amount to the power storage information management device 110.

Upon receiving the input of the power amount data output from the power meter (S604), the power amount data input reception section 113 of the power storage information management device 110 transmits the power amount data to the attribute evaluation section 112 and the attribute data transmission section 115.

Upon receiving the condition data transmitted from the condition data reception section 114 and receiving the power amount data transmitted from the power amount data input reception section 113, the attribute data transmission section 115 of the power storage information management device 110 transmits attribute data including attribute information of power discharged from the storage battery B to the power reception information management device 150 (S605). For example, the attribute data transmission section 115 calculates the number of points to be assigned to the customer R by multiplying the number of points per unit power amount to be assigned to the customer R represented by the condition data by the discharging amount represented by the power amount data. Then, the attribute data transmission section 115 reads a point ID of points capable of satisfying the number of points to be assigned to the customer R among owned points by referring to information stored in the attribute information storage section 117. Then, the attribute data transmission section 115 transmits attribute data representing the number of points to be assigned to the customer R and the point ID read from the attribute information storage section 117 to the attribute evaluation section 112 and the power reception information management device 150.

Upon receiving the attribute data transmitted from the power storage information management device 110, the attribute data reception section 152 of the power reception information management device 150 stores information about the point ID and the points represented by the attribute data in the attribute information storage section 156 (S606). When there is information already stored in the attribute information storage section 156, the attribute data reception section 152 updates a point value represented by the attribute data by performing an addition operation on a point value stored in association with the same point ID as its point ID. Thereby, the information as illustrated in Fig. 11 is stored in the attribute information storage section 156 of the power reception information management device 150. In addition, the attribute data reception section 152 transmits the attribute data to the display data output section 155.

Upon receiving the purchase price data transmitted from the purchase price calculation section 154 and receiving the attribute data transmitted from the attribute data reception section 152, the display data output section 155 of the power reception information management device 150 outputs display data for displaying the attribute information of the power received by the power reception facility A to the display (S607). For example, the display data output section 155 outputs display data for displaying information about a purchase price of power represented by the purchase price data or the number of points assigned from the user of the electric vehicle E represented by the attribute data as the attribute information of the power received by the power reception facility A. Thereby, the customer R can understand information about the purchase price of the purchased power, the number of acquired points, or the like. At this time, the customer R of the convenience store may assign a product corresponding to the purchase price of the power among products sold by the convenience store without paying the cash corresponding to the purchase price of the power to the user of the electric vehicle E. In addition, according to the number of points of the point service assigned from the user of the electric vehicle E, the customer R of the convenience store may assign a product of the convenience store.

On the other hand, upon receiving the condition data transmitted from the condition data reception section 114, receiving the power amount data transmitted from the power amount data input reception section 113, and receiving the attribute data transmitted from the attribute data transmission section 115, the attribute evaluation section 112 of the power storage information management device 110 evaluates the attribute of the power stored in the storage battery B after the discharging (S608). More specifically, the attribute evaluation section 112 evaluates an average unit price (yen/kWh), a power storage amount (kWh), and the number of points of the point service for power stored in the storage battery B after the discharging as the attribute of the power stored in the storage battery B after the discharging.

Here, it is assumed that the attribute information as illustrated in Fig. 5 is stored in the attribute information storage section 117 before the discharging. In this case, the storage amount of power stored before the discharging is 15 (kWh). Then, assuming that the discharging amount represented by the power amount data is 5 (kWh), the attribute evaluation section 112 evaluates the storage amount of power stored in the storage battery B after the discharging as 15 (kWh)-5 (kWh) = 10 (kWh).

In addition, referring to Fig. 5, the number of points of the point service before the discharging is 70 in a point ID "X2." Then, when information about the point ID "X2" and 25 points is included in the attribute data, the attribute evaluation section 112 evaluates the number of points of the point service after the discharging as 45 points in the point ID "X2." In addition, for example, assuming that information about the point ID "X2" and 50 points is included in the attribute data, the attribute evaluation section 112 evaluates the number of points of the point service after the discharging as 20 points of the point ID "X2."

In addition, referring to Fig. 5, the storage amount of power stored in the storage battery B before the discharging is 15 (kWh). In addition, referring to Fig. 5, an average unit price of the power stored in the storage battery B before the discharging is 40 (yen/kWh). Then, when the discharging amount represented by the power amount data is 5 (kWh) and information about the purchase unit price "35 (yen/kWh)" is included in the condition data, the attribute evaluation section 112 evaluates the average unit price of the power stored in the storage battery B after the discharging as (15 (kWh)x40 (yen/kWh)-5 (kWh)x35 (yen/kWh))/(15 (kWh)-5 (kWh)) =42.5 (yen kWh). In addition, for example, when the discharging amount represented by the power amount data is 5 (kWh) and information about the purchase unit price "50 (yen/kWh)" is included in the condition data, the attribute evaluation section 112 evaluates the average unit price of the power stored in the storage battery B after the discharging as (15 (kWh)×40 (yen/kWh)-5 (kWh)×50 (yen/kWh))/(15 (kWh)-5 (kWh)) = 35 (yen/kWh).

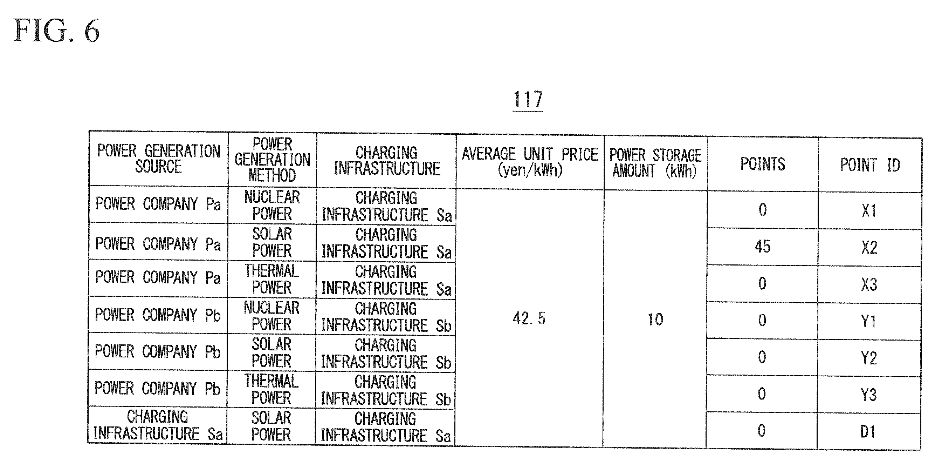

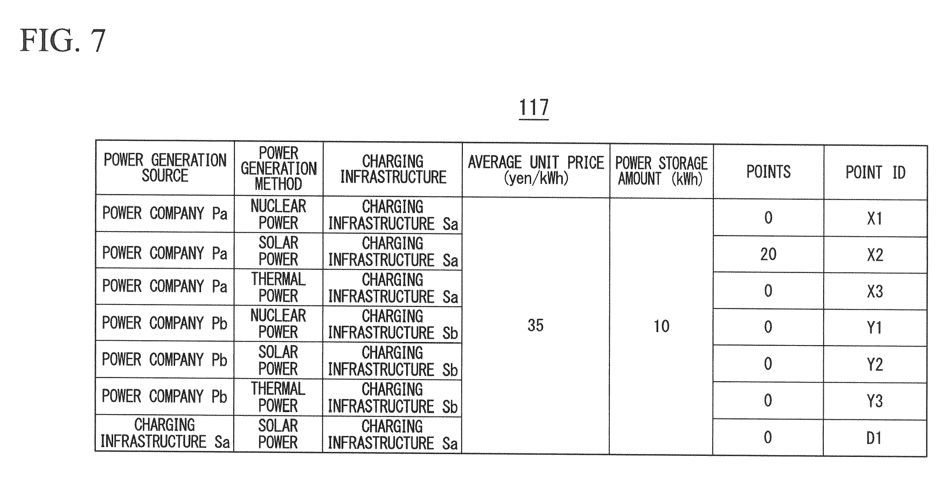

Then, the attribute evaluation section 112 stores the attribute information of the power evaluated as described above in the attribute information storage section 117 (S609). Thereby, the information as illustrated in Figs. 6 and 7 is stored in the attribute information storage section 117.

Thereby, when the attribute information stored in the attribute information storage section 117 is updated, the display data output section 116 of the power storage information management device 110 reads the attribute information stored in the attribute information storage section 117 and outputs display data for displaying current attribute information of the power stored in the storage battery B on the display to the display (S610). Then, on the display, updated information about the average unit price (yen/kWh), the power storage amount (kWh), and the number of points of the point service is displayed as the current attribute information of the power stored in the storage battery B. Thereby, the user of the electric vehicle E can understand the attribute information of the power stored in the storage battery B after the discharging.

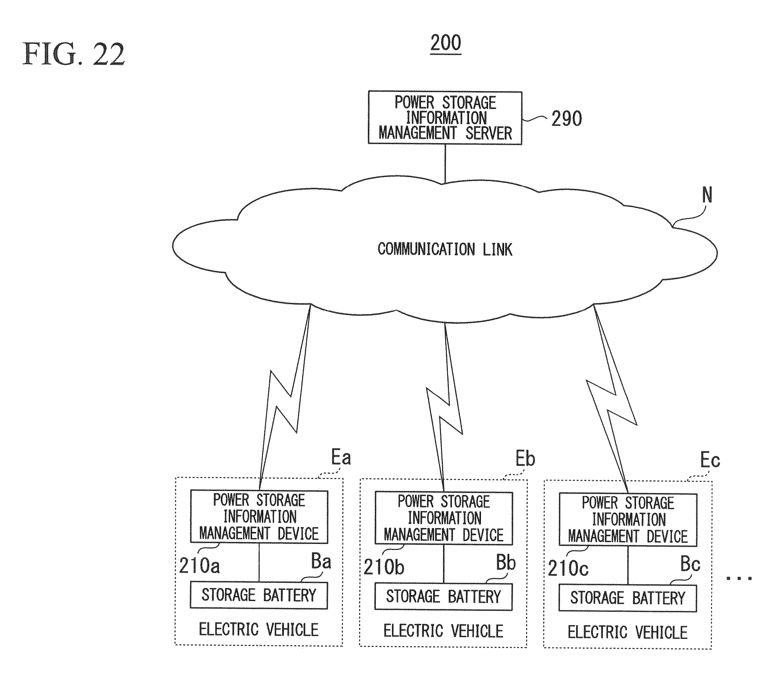

Fig. 22 illustrates an example of a usage environment of a power delivery/reception system 200 according to a second embodiment. Like the above-described power delivery/reception system 100, the power delivery/reception system 200 is a system in which power is sold/purchased using the storage battery B of the electric vehicle E. In the power delivery/reception system 200, it is assumed that the user of the electric vehicle E delivers/receives power to/from the storage battery B of another electric vehicle E.

The power delivery/reception system 200 includes a plurality of power storage information management device 210a, 210b, 210c, ... (hereinafter collectively referred to as a power storage information management device 210), a power storage information management server 290, and a communication link N.

Like the above-described power storage information management device 110, the power storage information management device 210 is a device which manages attribute information of power stored in the storage battery B. More specifically, the power storage information management device 210 is mounted on the electric vehicle E. Then, the power storage information management device 210 is electrically connected to each of a power meter, a display, and a communication device which are not illustrated. Here, the power meter is an instrument for measuring a charging/discharging amount of the storage battery B. In addition, the display is a device which displays information managed by the power storage information management device 210. In addition, the communication device includes a security module and is a device for enabling the power storage information management device 210 to securely perform communication with another power storage information management device 210 or the power storage information management server 290.

The security module, for example, is a component for encrypting data or technically performing protection using defense software, an access restriction mechanism, or the like and eliminating risks such as leaking of secrets or an attack, intrusion, eavesdropping, or alteration from the outside.

The power storage information management server 290 is a server which manages attribute information of power stored in the storage battery B of each electric vehicle E. More specifically, the power storage information management server 210, for example, is managed by a provider which operates the power delivery/reception system 200. Then, the power storage information management server 290 establishes a communication connection to the communication link N.

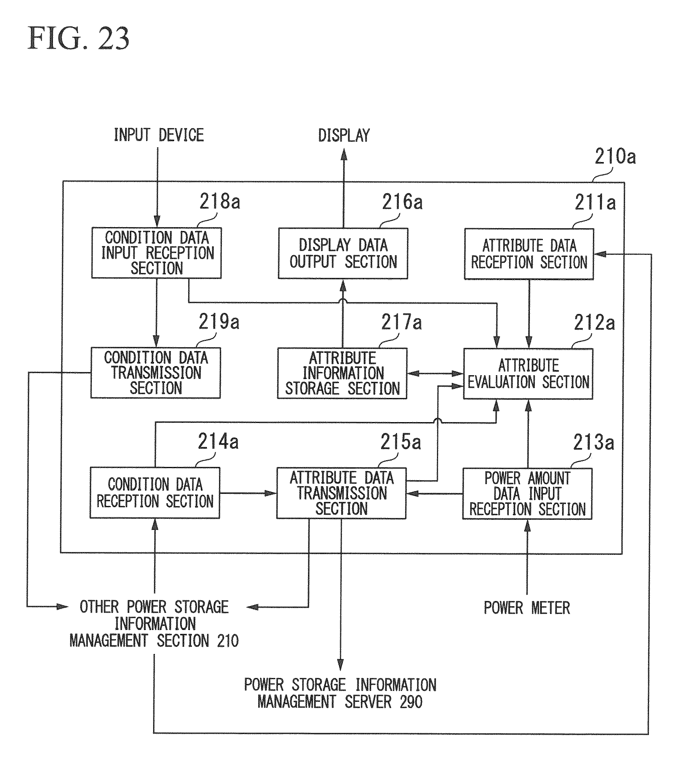

Fig. 23 illustrates an example of a block configuration of the power storage information management device 210a. The power storage information management device 210a has an attribute data reception section 211a, an attribute evaluation section 212a, a power amount data input reception section 213a, a condition data reception section 214a, an attribute data transmission section 215a, a display data output section 216a, an attribute information storage section 217a, a condition data input reception section 218a, and a condition data transmission section 219a. Hereinafter, a function and operation of each component will be described.

In addition, in addition to the power storage information management device 210a, the power storage information management devices 210b, 210c, ... also have the same components as the power storage information management device 210a. When a component of the power storage information management device 210 is distinguished in the following description, the distinguishment is made by suffixing one of a, b, c... to the number of the component according to the power storage information management device 210 including the component. For example, the attribute data reception sections 211 a, 211 b, and 211c represent the components of the power storage information management devices 210a, 210b, and 210c, respectively.

In addition, in the following description, functions and operations of components to which no suffix is attached represent functions and operations of any component to which the same reference number is assigned. For example, the functions and operations described with regard to the attribute data reception section 211 represent the functions and operations of each of the attribute data reception sections 211a, 211b, 211c, ...

Because functions and operations of the attribute evaluation section 212, the power amount data input reception section 213, and the display data output section 216 are the same as the functions and operations of the attribute evaluation section 112, the power amount data input reception section 113, and the display data output section 116 of the above-described power storage information management device 110, detailed description thereof is omitted.

When the storage battery B of an own vehicle is charged with the power supplied from the storage battery B of another electric vehicle E, the attribute data reception section 211 receives attribute data including attribute information of power supplied to the storage battery B of the own vehicle from another power storage information management device 110.

The condition data reception section 214 receives data representing a condition when the power is delivered/received from the other power storage information management device 110.

When the power discharged from the storage battery B of the own vehicle has been supplied to the storage battery B of another electric vehicle, the attribute data transmission section 215 transmits the attribute data including the attribute information of the power discharged from the storage battery B of the own vehicle to the other power storage information management device 210 and the power storage information management server 290.

In addition, when the attribute information stored in the attribute information storage section 217 is updated, the attribute data transmission section 215 transmits the attribute data including the attribute information stored in the attribute information storage section 217 to the power storage information management server 290.

The condition data input reception section 218 receives an input of data representing a condition when the power is sold/purchased via an input device.

The condition data transmission section 219 transmits data representing a condition when the power is sold/purchased to the other power storage information management device 210.

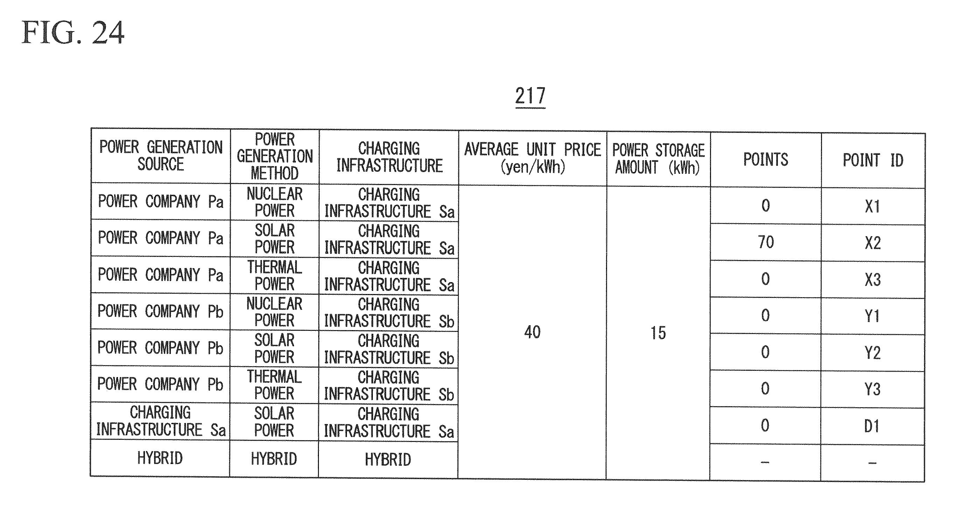

Each of Figs. 24 to 27 illustrates an example of information stored in the attribute information storage section 217 in the form of a table. In the attribute information storage section 217, as in the above-described attribute information storage section 117, information about a power generation source, a power generation method, a charging infrastructure, an average unit price (yen/kWh), a power storage amount (kWh), points, and a point ID is associated and stored.

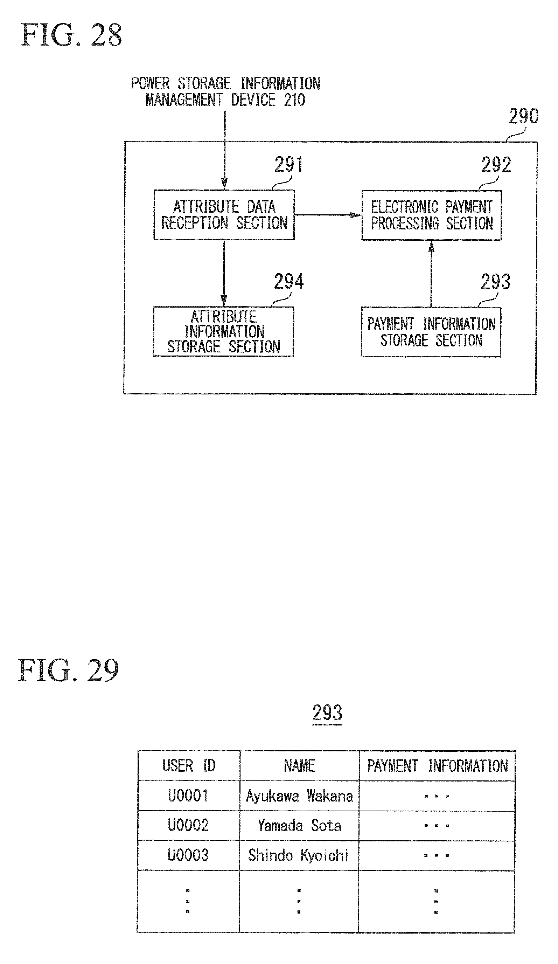

Fig. 28 illustrates an example of a block configuration of the power storage information management server 290. The power storage information management server 290 has an attribute data reception section 291, an electronic payment processing section 292, a payment information storage section 293, and an attribute information storage section 294. Hereinafter, a function and operation of each component will be described.

The attribute data reception section 291 receives the attribute data including the attribute information of the power discharged from the storage battery B from the power storage information management device 210. In addition, the attribute data reception section 291 receives the attribute data including the attribute information of the power stored in the storage battery B from the power storage information management device 210.

The electronic payment processing section 292 electronically pays purchase money of the power delivered/received to/from the user of the electric vehicle E.

Fig. 29 illustrates an example of information stored in the payment information storage section 293 in the form of a table.

In the user information storage section 293, information about a user ID, a name, and payment information is associated and stored.

The user ID is an identification code for uniquely identifying each user among users of the power delivery/reception system 200. The name is a name of the user identified by the user ID. The payment information is information necessary for performing electronic payment when the user identified by the user ID sells/purchases the power to/from another user.

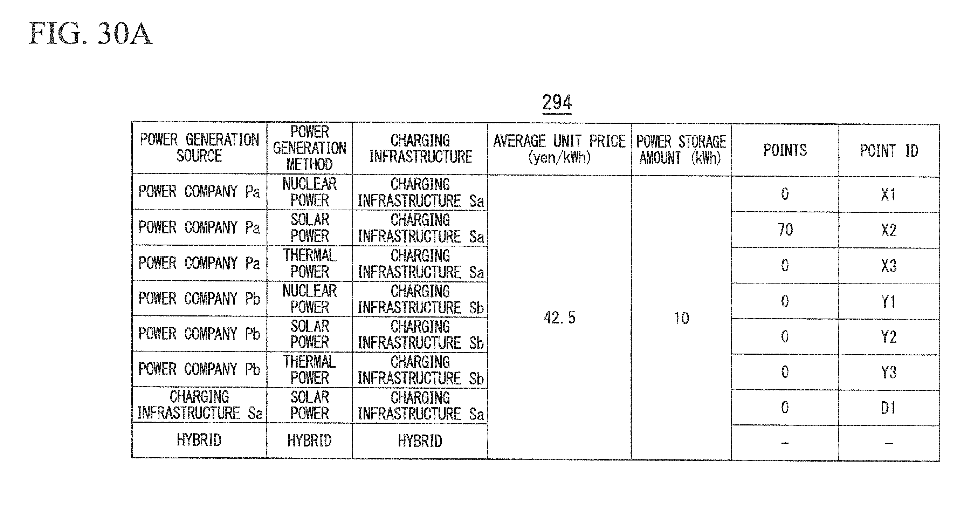

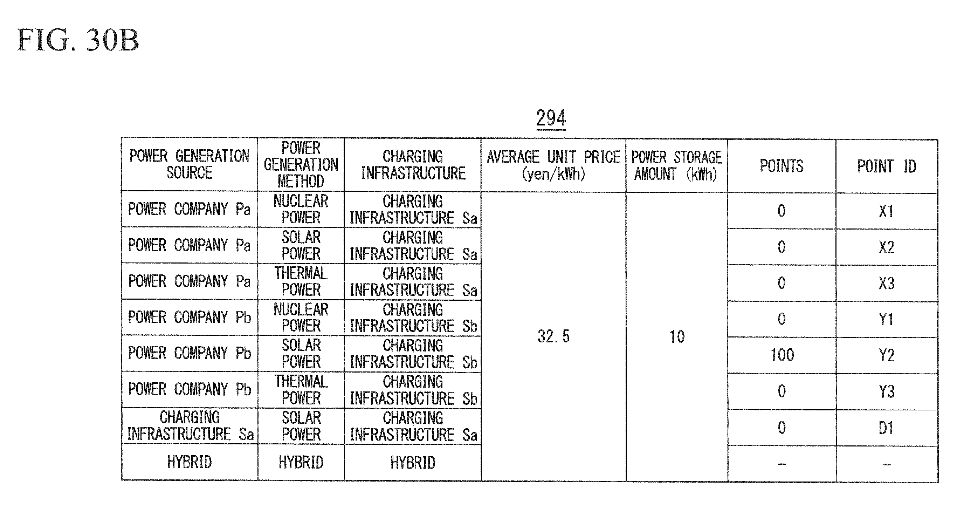

Each of Figs. 30A and 30B illustrates an example of information stored in the attribute information storage section 294 in the format of a table. In the attribute information storage section 294, the same attribute information as the attribute information stored in the attribute information storage section 217 of the power storage information management device 210 is individually stored.

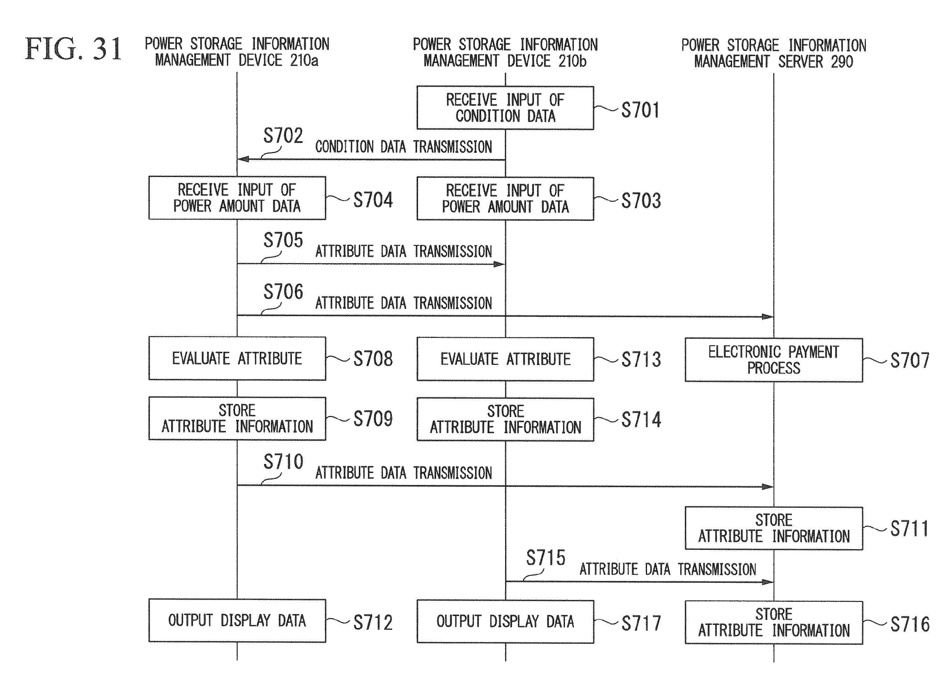

Fig. 31 illustrates an example of an operation sequence of the power storage information management device 210a, the power storage information management device 210b, and the power storage information management server 290. This operation sequence represents an operation when power discharged from the storage battery B of the electric vehicle E is supplied to the storage battery B of the other electric vehicle E. In addition, this operation sequence will be described with reference to Figs. 1 to 28 together.

In the power delivery/reception system 200, it is assumed that power stored in the storage battery B is sold/purchased between the users of the electric vehicle E. In the following description, an example in which a user of an electric vehicle Eb purchases power from a user of an electric vehicle Ea will be described. When the power is sold/purchased, the users of the electric vehicles Ea and Eb negotiate a condition such as a transaction unit price (yen/kWh) of the power. Then, when the condition is determined through the negotiation, the user of the electric vehicle Eb inputs condition data including the determined condition and his/her own user ID to the power storage information management device 210b using the input device.

Upon receiving the input of the condition data (S701), the condition data input reception section 218b of the power storage information management device 210b transmits the condition data to the attribute evaluation section 212a and the condition data transmission section 219b.

Upon receiving the condition data transmitted from the condition data input reception section 218b, the condition data transmission section 219b of the power storage information management device 210b transmits the condition data to the power storage information management device 210a using near-field wireless communication (S702). Upon receiving the condition data transmitted from the power storage information management device 210b, the condition data reception section 214a of the power storage information management device 210a transmits the condition data to the attribute evaluation section 212a and the attribute data transmission section 215a.

Then, when the supply of power from the storage battery Ba of the electric vehicle Ea to the storage battery Eb of the electric vehicle Eb starts, the power meter of the electric vehicle Eb starts to measure a charging amount of the storage battery Bb. Then, the supply of power from the storage battery Ba to the storage battery Bb ends, the power meter of the electric vehicle Eb outputs the power amount data representing the measured charging amount to the power storage information management device 210b.

Upon receiving the input of the power amount data output from the power meter (S703), the power amount data input reception section 213b of the power storage information management device 210b transmits the power amount data to the attribute evaluation section 212b.

Likewise, when the supply of power from the storage battery Ba of the electric vehicle Ea to the storage battery Bb of the electric vehicle Eb starts, the power meter of the electric vehicle Ea starts to measure a discharging amount of the storage battery Ba. Then, when the supply of power from the storage battery Ba to the storage battery Bb ends, the power meter of the electric vehicle Ea outputs power amount data representing the measured discharging amount to the power storage information management device 210a.

Upon receiving the input of the power amount data output from the power meter (S704), the power amount data input reception section 213a of the power storage information management device 210a transmits the power amount data to the attribute evaluation section 212a and the attribute data transmission section 215a.

Upon receiving the condition data transmitted from the condition data reception section 214a and receiving the power amount data transmitted from the power amount data input reception section 213a, the attribute data transmission section 215a of the power storage information management device 210a transmits the attribute data including the attribute information of the power discharged from the storage battery Ba to the power storage information management device 210b and the power storage information management server 290 (S705 and S706). For example, the attribute data transmission section 215a transmits attribute data including attribute information representing power in which power generated by various power generation sources, power generated by various power generation methods, and power supplied by various charging infrastructures S are mixed to the power storage information management device 210b. In addition, the attribute data transmission section 215a calculates a transaction price (yen) of the power by multiplying a value of the transaction price (yen/kWh) of the power included in the condition data by a value of a discharging amount (kWh) represented by the power amount data input reception section 213. Then, the attribute data transmission section 215a transmits attribute data including information about the calculated transaction price (yen) of the power, a user ID of the user thereof, and a user ID of a transaction partner included in the condition data to the power storage information management server 290 and the attribute evaluation section 212a.

Upon receiving the attribute data transmitted from the power storage information management device 210a, the attribute data reception section 291 of the power storage information management server 290 transmits the attribute data to the electronic payment processing section 292.

Upon receiving the attribute data transmitted from the attribute data reception section 291, the electronic payment processing section 292 of the power storage information management server 290 performs electronic payment related to selling/purchasing of the power between the users identified by the respective user IDs included in the attribute data by referring to the payment information stored in the payment information storage section 293. Thereby, in the power delivery/reception system 200, it is possible to perform a transaction without directly exchanging money between the users when the power is sold/purchased between the users of the electric vehicles E.

On the other hand, upon receiving the condition data transmitted from the condition data reception section 214a, receiving the power amount data transmitted from the power amount data input reception section 213a, and receiving the attribute data transmitted from the attribute data transmission section 215a, the attribute evaluation section 212a of the power storage information management device 210a evaluates the attribute of the power stored in the storage battery Ba after the discharging (S708). More specifically, the attribute evaluation section 212a evaluates an average unit price (yen/kWh) and a power storage amount (kWh) for power stored in the storage battery Ba after the discharging as the attribute of the power stored in the storage battery Ba after the discharging.

Here, it is assumed that the attribute information as illustrated in Fig. 24 is stored in the attribute information storage section 217a before the discharging. In this case, the storage amount of power stored before the discharging is 15 (kWh).

Then, assuming that the discharging amount represented by the power amount data is 5 (kWh), the attribute evaluation section 212a evaluates the storage amount of power stored in the storage battery Ba after the discharging as 15 (kWh)-5 (kWh) = 10 (kWh).

In addition, referring to Fig. 24, the storage amount of power stored in the storage battery Ba before the discharging is 15 (kWh). In addition, referring to Fig. 24, the average unit price of the power stored in the storage battery Ba before the discharging is 40 (yen/kWh). Then, assuming that the discharging amount represented by the power amount data is 5 (kWh) and information about the purchase unit price "35 (yen/kWh)" is included in the condition data, the attribute evaluation section 212a evaluates the average unit price of the power stored in the storage battery B after the discharging as (15 (kWh)×40 (yen/kWh)-5 (kWh)×35 (yen/kWh))/(15 (kWh)-5 (kWh)) = 42.5 (yen kWh).

In addition, because information about transacted points is not included in the attribute data in this example, the attribute evaluation section 212a does not perform evaluation related to the points as the attribute information. However, when the information about the transacted points is included in the attribute data, the attribute evaluation section 212a performs point-related evaluation as in the process by the above-described attribute evaluation section 112.

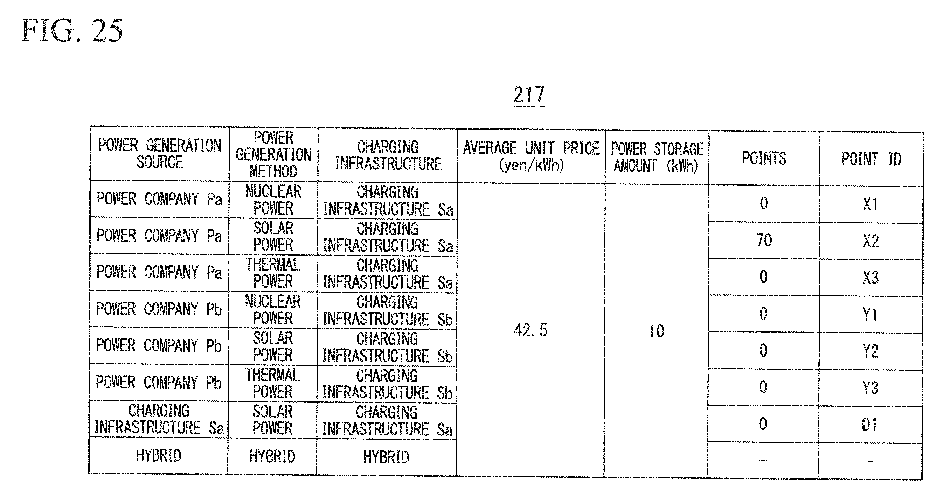

Then, the attribute evaluation section 212a stores the attribute information of the power evaluated as described above in the attribute information storage section 217a (S709). Thereby, the information as illustrated in Fig. 25 is stored in the attribute information storage section 217a.

Thereby, when the attribute information stored in the attribute information storage section 217a is updated, the attribute data transmission section 215a of the power storage information management device 210a reads the attribute information stored in the attribute information storage section 217a and transmits the attribute data representing the attribute information to the power storage information management server 290 (S710).

Upon receiving the attribute data transmitted from the power storage information management device 210a, the attribute data reception section 291 of the power storage information management server 290 stores the attribute data in the attribute information storage section 294 (S711). Thereby, information as illustrated in Fig. 30A is stored in the attribute information storage section 294 of the power storage information management server 290. Thereby, the attribute information managed by the power storage information management device 210a is backed up in the power storage information management server 290.

On the other hand, when the attribute information stored in the attribute information storage section 217a of the power storage information management device 210a is updated, the display data output section 216a of the power storage information management device 210a reads the attribute information stored in the attribute information storage section 217a and outputs display data for displaying current attribute information of the power stored in the storage battery Ba on the display to the display (S712). Then, on the display, updated information about the average unit price (yen/kWh) and the power storage amount (kWh) is displayed as the attribute information of the power stored in the storage battery Ba. Thereby, the user of the electric vehicle Ea can understand the attribute information of the power stored in the storage battery Ba after the discharging.

On the other hand, upon receiving the condition data transmitted from the condition data input reception section 214b, receiving the power amount data transmitted from the power amount data input reception section 213b, and receiving the attribute data transmitted from the attribute data reception section 211 b, the attribute evaluation section 212b of the power storage information management device 210b evaluates the attribute of the power stored in the storage battery Bb after the charging (S713). More specifically, the attribute evaluation section 212b evaluates an average unit price (yen/kWh) and a power storage amount (kWh) for power stored in the storage battery Bb after the charging as the attribute of the power stored in the storage battery Bb after the charging.

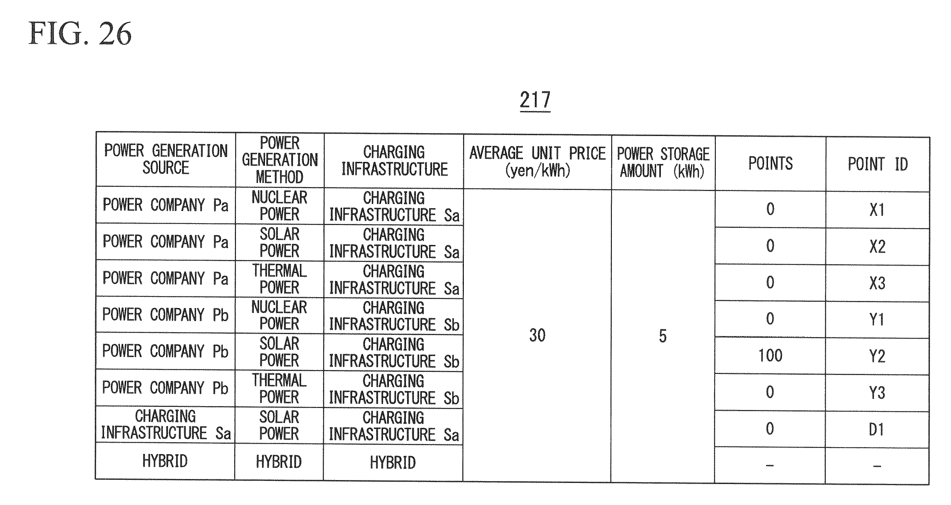

Here, it is assumed that the attribute information as illustrated in Fig. 26 is stored in the attribute information storage section 217b before the charging. In this case, the storage amount of power stored before the charging is 5 (kWh). Then, assuming that the charging amount represented by the power amount data is 5 (kWh), the attribute evaluation section 212b evaluates the storage amount of power stored in the storage battery Bb after the charging as 5 (kWh)+5 (kWh) = 10 (kWh).

In addition, referring to Fig. 26, the storage amount of power stored in the storage battery Bb before the charging is 5 (kWh). In addition, referring to Fig. 26, an average unit price of the power stored in the storage battery Bb before the charging is 30 (yen/kWh). Then, when the charging amount represented by the power amount data is 5 (kWh) and information about the transaction unit price "35 (yen/kWh)" is included in the condition data, the attribute evaluation section 212b evaluates the average unit price of the power stored in the storage battery Bb after the charging as (5 (kWh)×30 (yen/kWh)+5 (kWh)x35 (yen/kWh))/(5 (kWh)+5 (kWh)) = 32.5 (yen/kWh).

In addition, because information about transacted points is not included in the attribute data in this example, the attribute evaluation section 212b does not perform evaluation related to the points as the attribute information. However, when the information about the transacted points is included in the attribute data, the attribute evaluation section 212b performs point-related evaluation as in the process by the above-described attribute evaluation section 112.

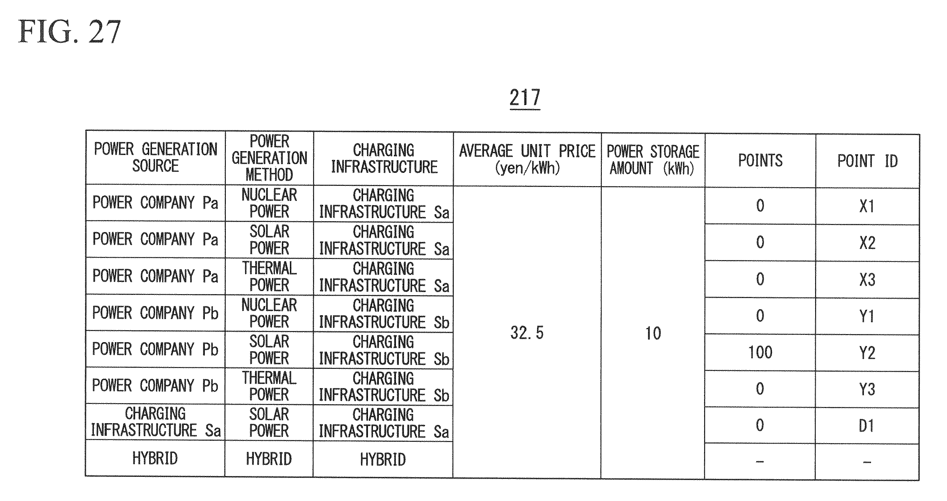

Then, the attribute evaluation section 212b stores the attribute information of the power evaluated as described above in the attribute information storage section 217b (S714). Thereby, information as illustrated in Fig. 27 is stored in the attribute information storage section 217b.

Thereby, when the attribute information stored in the attribute information storage section 217b is updated, the attribute data transmission section 215b of the power storage information management device 210b reads the attribute information stored in the attribute information storage section 217b and transmits the attribute data representing the attribute information to the power storage information management server 290 (S715).

Upon receiving the attribute data transmitted from the power storage information management device 210b, the attribute data reception section 291 of the power storage information management server 290 stores the attribute data in the attribute information storage section 294 (S716). Thereby, information as illustrated in Fig. 30B is stored in the attribute information storage section 294 of the power storage information management server 290. Thereby, the attribute information managed by the power storage information management device 210b is backed up in the power storage information management server 290.

On the other hand, when the attribute information stored in the attribute information storage section 217b of the power storage information management device 210b is updated, the display data output section 216b of the power storage information management device 210b reads the attribute information stored in the attribute information storage section 217b and outputs display data for displaying current attribute information of the power stored in the storage battery Bb on the display to the display (S712). Then, on the display, updated information about the average unit price (yen/kWh) and the power storage amount (kWh) is displayed as the attribute information of the power stored in the storage battery Bb. Thereby, the user of the electric vehicle Eb can understand the attribute information of the power stored in the storage battery Bb after the charging.

As described above, in the power delivery/reception systems 100 and 200, attribute information of power can be associated with the power of charging/discharging of a storage battery B upon delivering/receiving the power via the storage battery B.

Although the present invention has been described with reference to embodiments, the technical scope of the present invention is not limited to the scope of the abovementioned embodiments. It is apparent to those skilled in the art that various alterations and improvements can be made to the abovementioned embodiments. It is apparent from the appended claims that embodiments with the various alterations and improvement will be included in the technical scope of the present invention.

### INDUSTRIAL APPLICABILITY

Power of charging/discharging of a storage battery can be associated with attribute information of the power upon delivering/receiving the power via the storage battery. Energy management in which a load on an environment is smaller is possible.

### DESCRIPTION OF THE REFERENCE SYMBOLS

- 100: Power delivery/reception system
- 110: Power storage information management device
- 111: Attribute data reception section
- 112: Attribute evaluation section
- 113: Power amount data input reception section
- 114: Condition data reception section
- 115: Attribute data transmission section
- 116: Display data output section
- 117: Attribute information storage section
- 130: Power supply information management device
- 131: Attribute data reception section
- 132: Attribute data input reception section
- 133: Selection data input reception section
- 134: Power amount data input reception section
- 135: Attribute data transmission section
- 136: Attribute information storage section
- 150: Power reception information management device
- 151: Condition data transmission section
- 152: Attribute data reception section
- 153: Power amount data input reception section
- 154: Purchase price calculation section
- 155: Display data output section
- 156: Attribute information storage section
- 157: Condition information storage section
- 170: Power generation information management device
- 171: Attribute data input reception section
- 172: Attribute data distribution section
- 173: Attribute information storage section
- 200: Power delivery/reception system
- 210: Power storage information management device
- 211: Attribute data reception section
- 212: Attribute evaluation section
- 213: Power amount data input reception section
- 214: Condition data reception section
- 215: Attribute data transmission section
- 216: Display data output section
- 217: Attribute information storage section
- 218: Condition data input reception section
- 219: Condition data transmission section
- 290: Power storage information management server
- 291: Attribute data reception section
- 292: Electronic payment processing section
- 293: Payment information storage section
- 294: Attribute information storage section
- A: Power reception facility
- B: Storage battery
- C: Charger
- E: Electric vehicle
- N: Communication link
- P: Power company
- S: Charging infrastructure
- R: Customer

## Claims

1. A power delivery/reception system which delivers/receives power using a storage battery, the power delivery/reception system comprising:
a power storage information management device configured to manage attribute information of power stored in the storage battery,
wherein the power storage information management device includes:
an attribute evaluation section configured to evaluate an attribute of the power stored in the storage battery based on the attribute information of the power stored in the storage battery every time the storage battery is charged and discharged; and
an attribute information storage section in which the attribute information of the power evaluated by the attribute evaluation section is stored.

2. The power delivery/reception system according to claim 1,
wherein the power storage information management device further includes:
an attribute data reception section configured to receive attribute data including the attribute information of the power supplied to the storage battery from a device which manages the attribute information of the power of a power supply source when the storage battery is charged with the power supplied from the power supply source, and
wherein the attribute evaluation section evaluates the attribute of the power stored in the storage battery after charging based on the attribute information included in the attribute data received by the attribute data reception section and the attribute information stored in the attribute information storage section.

3. The power delivery/reception system according to claim 1 or 2,
wherein the power storage information management device further includes:
an attribute data transmission section configured to transmit the attribute data including the attribute information of the power discharged from the storage battery to a device which manages the attribute information of the power of a power supply destination when the power discharged from the storage battery is supplied to the power supply destination, and
wherein the attribute evaluation section evaluates the attribute of the power stored in the storage battery after discharging based on the attribute information included in the attribute data transmitted by the attribute data transmission section and the attribute information stored in the attribute information storage section.

4. The power delivery/reception system according to any one of claims 1 to 3, wherein the power storage information management device manages information about a power generation scheme as the attribute information of the power.

5. The power delivery/reception system according to any one of claims 1 to 4, wherein the power storage information management device manages information about a power company generating the power as the attribute information of the power.

6. The power delivery/reception system according to any one of claims I to 5, wherein the power storage information management device manages information about a charging infrastructure selling the power as the attribute information of the power.

7. A power storage information management device which manages attribute information of power stored in a storage battery, the power storage information management device comprising:
an attribute evaluation section configured to evaluate an attribute of the power stored in the storage battery based on the attribute information of the power stored in the storage battery every time the storage battery is charged and discharged; and
an attribute information storage section in which the attribute information of the power evaluated by the attribute evaluation section is stored.

8. A control method of controlling a power storage information management device which manages attribute information of power stored in a storage battery, the control method comprising:
an attribute evaluation step of evaluating an attribute of power stored in the storage battery based on the attribute information of the power stored in the storage battery every time the storage battery is charged and discharged.

9. A program for use in a power storage information management device which manages attribute information of power stored in a storage battery, the program causing the power storage information management device to function as:
an attribute evaluation section configured to evaluate an attribute of the power stored in the storage battery based on the attribute information of the power stored in the storage battery every time the storage battery is charged and discharged; and
an attribute information storage section in which the attribute information of the power evaluated by the attribute evaluation section is stored.
